(19) Europäisches Patentamt
European Patent Office
Office européen des brevets

(11) EP 4 674 890 A1

(12) EUROPEAN PATENT APPLICATION
published in accordance with Art. 153(4) EPC

(43) Date of publication:
**07.01.2026 Bulletin 2026/02**

(21) Application number: **24764046.9**

(22) Date of filing: **01.03.2024**

(51) International Patent Classification (IPC):
***C08G 64/04** (2006.01)* ***C08G 18/44** (2006.01)*
***C09D 175/04** (2006.01)* ***C09J 175/04** (2006.01)*
***C09K 3/10** (2006.01)*

(52) Cooperative Patent Classification (CPC):
**C08G 18/44; C08G 64/04; C09D 175/04; C09J 175/04; C09K 3/10**

(86) International application number:
**PCT/JP2024/007833**

(87) International publication number:
**WO 2024/181569 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.03.2023 JP 2023031949**

(71) Applicant: **Asahi Kasei Kabushiki Kaisha**
**Tokyo 1000006 (JP)**

(72) Inventor: **IWATA, Yusuke**
**Tokyo 100-0006 (JP)**

(74) Representative: **Strehl & Partner mbB**
**Maximilianstrasse 54**
**80538 München (DE)**

# (54) CARBONATE GROUP-CONTAINING POLYOL

(57) Provided is a carbonate group-containing polyol comprising a constituent unit represented by the following formula (I), and having a melt viscosity of 500 to 200000 mPa·s at 50°C:

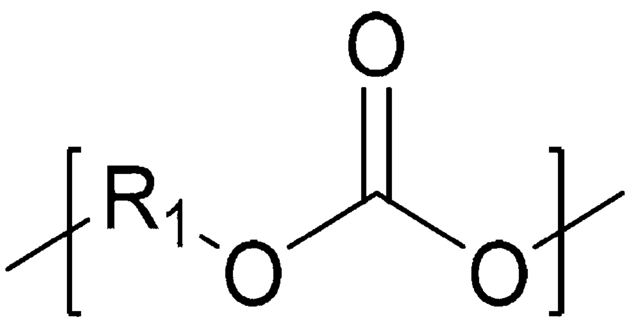

Formula (I)

wherein $R_1$ is an organic group containing a) an organic group having two or more aromatic cyclic structures, and b) an optional aliphatic hydrocarbon group, and has at least one structure wherein the aromatic cyclic structure and the aliphatic hydrocarbon group are linked through an ether bond.

EP 4 674 890 A1

# Description

## Technical Field

The present invention relates to a carbonate group-containing polyol.

## Background Art

Polycarbonate diol, a carbonate group-containing polyol, is useful as a starting material in producing polyurethane resin or urethane acrylate through reaction with a polyisocyanate compound and as a starting material for engineering plastics, adhesives, coating materials, and the like, as in polyester polyol or polyether polyol, and is also used as a modifier for polyester and the like. In this context, the polyester polyol has an ester bond. Therefore, urethane resin produced using this polyester polyol is disadvantageous in that hydrolysis resistance is poor. The polyether polyol has an ether bond. Therefore, polyurethane resin produced using this polyether polyol is disadvantageous in that weather resistance and heat resistance are poor. On the other hand, polycarbonate diol having a repeating unit represented by -[O-R-O(CO)]- wherein R represents a divalent hydrocarbon group is free from the disadvantages described above. Polyurethane or an engineering plastic produced using this polycarbonate diol has advantages such as excellent hydrolysis resistance, weather resistance, and heat resistance, and industrially easy production.

Polyurethane compounds are widely used in, for example, interior and exterior materials for aircrafts, automobiles, and the like, exterior wall and floor materials of homes, and parts of home electronics and electronic and electric materials, or as starting materials for coating materials, coating agents, or adhesives. Coating films of the coating materials, the coating agents, or the like mentioned above not only create the beauty of appearance but play a role in protecting base materials and are therefore required to have hardness, strength, durability, and the like. For this purpose, there is a strong demand for polyurethane compounds that provide harder coating films.

In order to further improve mechanical strength, heat resistance, weather resistance, and the like of, for example, engineering plastics produced using polycarbonate diol, for example, Patent Document 1 has proposed a method for producing aromatic polycarbonate diol having phenolic hydroxy groups at both ends using HO-Ar-OH wherein Ar represents an aromatic compound residue. For example, Patent Document 2 has proposed an aromatic group-containing polycarbonate diol using aromatic ether diol, the polycarbonate diol being excellent in industrial productivity while improving mechanical characteristics, hydrolysis resistance, and the like.

## List of Prior Art Documents

### Patent Document

Patent Document 1: Japanese Patent Laid-Open No. 2-251523

Patent Document 2: Japanese Patent Laid-Open No. 2011-148886

## Summary of Invention

### Problems to be Solved by Invention

However, the phenolic hydroxy groups of the polycarbonate diol described in Patent Document 1 generally have a very slow reaction rate for an isocyanate group, as compared with alcoholic hydroxy group. The aromatic polycarbonate diol having the terminal phenolic hydroxy groups described in Patent Document 1 is reportedly unsuitable as a starting material in the case of producing polyurethane. Thus, the technique of the patent literature has room for improvement. Patent Document 2 discloses a method for producing an aromatic group-containing polycarbonate diol and physical properties thereof. However, the patent literature does not particularly disclose the physical properties of polyurethane obtained from the aromatic-containing polycarbonate diol, and mechanical characteristics thereof are also insufficient. Thus, the technique of the patent literature has room for improvement.

The present invention has been made in light of these circumstances, and an object of the present invention is to provide a carbonate group-containing polyol that can produce polyurethane excellent in mechanical characteristics such as breaking strength, breaking elongation, adhesiveness, scratch resistance, and heat resistance.

**Means for Solving Problems**

The present invention relates to the following.

[1] A carbonate group-containing polyol comprising a constituent unit represented by the following formula (I), and having a melt viscosity of 500 to 200000 mPa·s at 50°C:

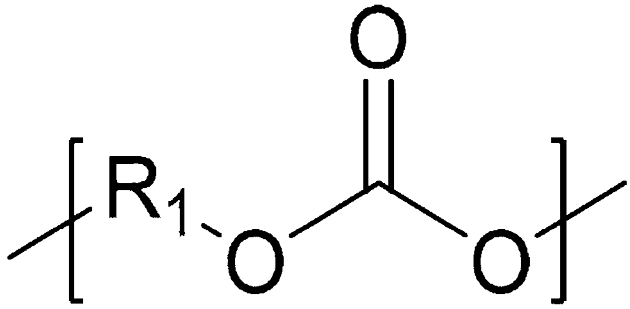

Formula (I)

wherein $R_1$ is an organic group containing

a) an organic group having two or more aromatic cyclic structures, and

b) an optional aliphatic hydrocarbon group, and

has at least one structure wherein the aromatic cyclic structure and the aliphatic hydrocarbon group are linked through an ether bond.

[2] The carbonate group-containing polyol according to [1], further comprising a constituent unit represented by the following formula (II), in addition to the constituent unit represented by the formula (I):

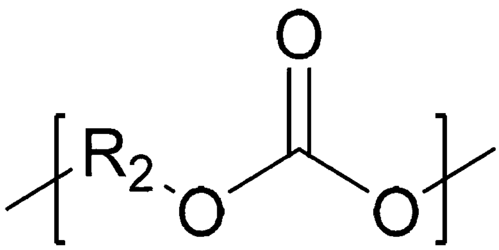

(Formula II)

wherein $R_2$ is an optional aliphatic hydrocarbon group.

[3] The carbonate group-containing polyol according to [1] or [2], wherein $R_1$ in the formula (I) comprises a structure represented by the following formula (III):

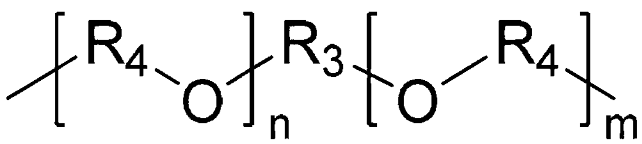

Formula (III)

wherein $R_3$ is an organic group having two or more aromatic cyclic structures, $R_4$ is an optional aliphatic hydrocarbon group, each of n and m is an optional integer including 0, and m + n is 1 or more.

[4] The carbonate group-containing polyol according to any of [1] to [3], wherein a number-average molecular weight is 300 or larger and 5000 or smaller.

[5] The carbonate group-containing polyol according to any of [1] to [4], wherein a hydroxyl value (OH value) is 20 to 700 mgKOH/g.

[6] The carbonate group-containing polyol according to any of [1] to [5], wherein an aromatic concentration is 1 to 65% by mass.

[7] The carbonate group-containing polyol according to any of [1] to [6], wherein the constituent unit represented by the formula (I) comprises one or more members selected from the group consisting of a bisphenol A skeleton, a bisphenol F skeleton, a biphenyl skeleton, a fluorene skeleton, a thioether group, a sulfonyl group, and a phosphoric acid ester group.

[8] The carbonate group-containing polyol according to any of [2] to [7], wherein $R_2$ in the formula (II) contains an aliphatic hydrocarbon group having 2 to 5 carbon atoms.

[9] The carbonate group-containing polyol according to [8], wherein a number-average molecular weight is 300 or larger and 3000 or smaller, and an aromatic concentration is 10 to 50% by mass.

[10] The carbonate group-containing polyol according to any of [2] to [9], wherein $R_2$ in the formula (II) comprises two or more aliphatic structures each having 2 to 20 carbon atoms, and each of the aliphatic structures contains an aliphatic hydrocarbon group having 2 to 5 carbon atoms.

[11] The carbonate group-containing polyol according to any of [2] to [7], wherein $R_2$ in the formula (II) contains an aliphatic hydrocarbon group having 3 carbon atoms, and an aromatic concentration is 10 to 50% by mass.

[12] The carbonate group-containing polyol according to [11], wherein a number-average molecular weight is 300 or larger and 2000 or smaller.

[13] The carbonate group-containing polyol according to [11] or [12], wherein the aromatic concentration is 10 to 30% by mass.

[14] The carbonate group-containing polyol according to any of [11] to [13], wherein the number-average molecular weight is 300 or larger and 1500 or smaller.

[15] The carbonate group-containing polyol according to any of [11] to [14], wherein the number-average molecular weight is 300 or larger and 1000 or smaller, and the aromatic concentration is 20 to 30% by mass.

[16] The carbonate group-containing polyol according to any of [11] to [15], wherein $R_2$ in the formula (II) comprises two or more aliphatic structures each having 2 to 20 carbon atoms, and each of the aliphatic structures contains an aliphatic hydrocarbon group having 3 carbon atoms.

[17] The carbonate group-containing polyol according to any of [2] to [7], wherein $R_2$ in the formula (II) contains an aliphatic hydrocarbon group having 4 carbon atoms, and an aromatic concentration is 10 to 50% by mass.

[18] The carbonate group-containing polyol according to [17], wherein a number-average molecular weight is 300 or larger and 2000 or smaller.

[19] The carbonate group-containing polyol according to [17] or [18], wherein the aromatic concentration is 10 to 30% by mass.

[20] The carbonate group-containing polyol according to any of [17] to [19], wherein the number-average molecular weight is 300 or larger and 1000 or smaller.

[21] The carbonate group-containing polyol according to any of [17] to [20], wherein the number-average molecular weight is 300 or larger and 800 or smaller.

[22] The carbonate group-containing polyol according to any of [17] to [21], wherein the aromatic concentration is 20 to 30% by mass.

[23] The carbonate group-containing polyol according to any of [17] to [22], wherein $R_2$ in the formula (II) comprises two or more aliphatic structures each having 2 to 20 carbon atoms, and each of the aliphatic structures contains an aliphatic hydrocarbon group having 4 carbon atoms.

[24] The carbonate group-containing polyol according to any of [2] to [7], wherein $R_2$ in the formula (II) contains an aliphatic hydrocarbon group having 5 carbon atoms, and an aromatic concentration is 10 to 50% by mass.

[25] The carbonate group-containing polyol according to [24], wherein a number-average molecular weight is 300 or larger and 2000 or smaller.

[26] The carbonate group-containing polyol according to [24] or [25], wherein the aromatic concentration is 10 to 30% by mass.

[27] The carbonate group-containing polyol according to any of [24] to [26], wherein the number-average molecular weight is 300 or larger and 1500 or smaller.

[28] The carbonate group-containing polyol according to any of [24] to [27], wherein the number-average molecular weight is 300 or larger and 1000 or smaller.

[29] The carbonate group-containing polyol according to any of [24] to [28], wherein the aromatic concentration is 20 to 30% by mass.

[30] The carbonate group-containing polyol according to any of [24] to [29], wherein $R_2$ in the formula (II) comprises two or more aliphatic structures each having 2 to 20 carbon atoms, and each of the aliphatic structures contains an aliphatic hydrocarbon group having 5 carbon atoms.

[31] The carbonate group-containing polyol according to any of [2] to [7], wherein $R_2$ in the formula (II) contains an aliphatic hydrocarbon group having 6 carbon atoms, and an aromatic concentration is 10 to 50% by mass.

[32] The carbonate group-containing polyol according to [31], wherein a number-average molecular weight is 300 or larger and 2000 or smaller.

[33] The carbonate group-containing polyol according to [31] or [32], wherein an aromatic concentration is 20 to 50% by mass.

[34] The carbonate group-containing polyol according to any of [31] to [33], wherein the number-average molecular weight is 300 or larger and 1500 or smaller.

[35] The carbonate group-containing polyol according to any of [31] to [34], wherein $R_2$ in the formula (II) comprises two or more aliphatic structures each having 2 to 20 carbon atoms, and each of the aliphatic structures contains an aliphatic hydrocarbon group having 6 carbon atoms.

[36] The carbonate group-containing polyol according to any of [2] to [7], wherein $R_2$ in the formula (II) contains an aliphatic hydrocarbon group having 7 to 10 carbon atoms.

[37] The carbonate group-containing polyol according to [36], wherein $R_2$ in the formula (II) comprises two or more aliphatic structures each having 2 to 20 carbon atoms, and each of aliphatic structures contains an aliphatic hydrocarbon group having 7 to 10 carbon atoms.

[38] The carbonate group-containing polyol according to [36] or [37], wherein a number-average molecular weight is 300 or larger and 3000 or smaller, and an aromatic concentration is 10 to 50% by mass.

[39] The carbonate group-containing polyol according to any of [2] to [7], wherein $R_2$ in the formula (II) comprises two or more aliphatic structures each having 2 to 20 carbon atoms.

[40] Polyurethane which is a polymerized product of the carbonate group-containing polyol according to any of [1] to [39] and an isocyanate compound.

[41] An adhesive comprising the polyurethane according to [40].

[42] A coating material comprising the polyurethane according to [40].

[43] An encapsulant comprising the polyurethane according to [40].

## Advantages of Invention

The present invention can provide a carbonate group-containing polyol that can produce polyurethane excellent in mechanical characteristics such as breaking strength, breaking elongation, scratch resistance, adhesiveness, and heat resistance.

## Mode for Carrying Out Invention

One embodiment of the present invention (hereinafter, also referred to as the "present embodiment") will be described below. The present invention is not limited by the following embodiments and can be carried out through various changes or modifications made without departing from the spirit of the present invention.

In describing general formulas of compounds used in the present specification, definitions are used in accordance with the IUPAC rule of nomenclature, or trivial names may be used as names of specific groups or listed compounds, unless each individually described in the specification. In the present specification, all of the number of atoms, the number of substituents, and the number of items described represent integers.

The carbonate group-containing polyol according to the present embodiment comprises a constituent unit represented by the following formula (I), and has a melt viscosity of 500 to 200000 mPa·s at 50°C:

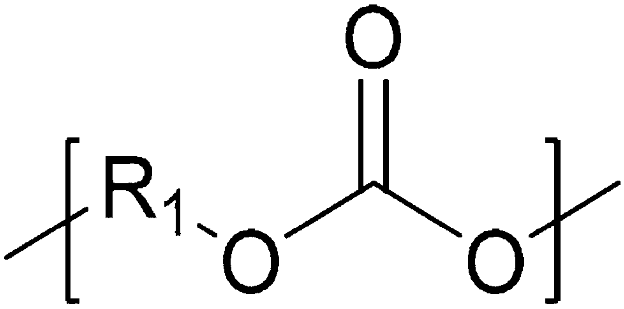

Formula (I)

wherein $R_1$ is an organic group containing

a) an organic group having two or more aromatic cyclic structures, and

b) an optional aliphatic hydrocarbon group, and

has at least one structure wherein the aromatic cyclic structure and the aliphatic hydrocarbon group are linked through an ether bond.

The carbonate group-containing polyol of the present embodiment thus configured can produce polyurethane excellent in mechanical characteristics such as breaking strength, breaking elongation, scratch resistance, adhesiveness, and heat resistance.

In the present embodiment, the aromatic cyclic structure refers to both of an aromatic ring and an aromatic heterocyclic ring. The phrase "having two or more aromatic cyclic structures" includes all of the case of having only two or more aromatic rings, the case of having only two or more aromatic heterocyclic rings, and the case of having two or more in total of aromatic rings and aromatic heterocyclic rings.

In the present embodiment, the aliphatic hydrocarbon group may be linear, branched, or alicyclic. The number of carbon atoms in the aliphatic hydrocarbon group is preferably 2 to 10.

In $R_1$ described above, at least one aromatic cyclic structure and the optional aliphatic hydrocarbon group are liked via an ether bond. The aromatic cyclic structure and the aliphatic hydrocarbon group are linked via an ether bond, whereby rigidity and flexibility are exerted at the same time, and polyurethane excellent in mechanical characteristics such as breaking strength, breaking elongation, and scratch resistance can presumably be obtained. If the organic group $R_1$ has one aromatic cyclic structure, sufficient mechanical characteristics are difficult to obtain. Therefore, it is preferred to have two or more aromatic cyclic structures. In the organic group $R_1$, the number of aromatic cyclic structures is nor particularly limited as long as the number is 2 or more. The number is realistically on the order of 2 to 6, preferably 2 to 4, in view of easy industrial availability.

$R_1$ in the formula (I) is an organic group containing a) an organic group having two or more aromatic cyclic

structures, and b) an optional aliphatic hydrocarbon group, and has at least one structure wherein the aromatic cyclic structure and the aliphatic hydrocarbon group are linked through an ether bond. In the case of representing $R_1$ by a structural formula, preferable examples thereof can include the following formula (III):

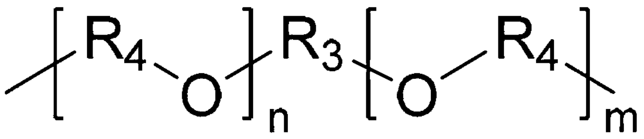

Formula (III)

In the formula (III), $R_3$ is an organic group having two or more aromatic cyclic structures, and $R_4$ is an optional aliphatic hydrocarbon group.

Each of m and n is an optional integer including 0, and m + n is 1 or more.

[[Method for producing carbonate group-containing polyol]]

A method for producing the carbonate group-containing polyol of the present embodiment is not particularly limited as long as the configuration described above is attained. The carbonate group-containing polyol can be produced, for example, by polymerizing a hydroxy compound and a carbonate compound through transesterification reaction.

The transesterification reaction in the method for producing the carbonate group-containing polyol according to the present embodiment can be performed in the presence or absence of a catalyst and is preferably performed in the presence of a catalyst from the viewpoint of reaction efficiency. Specific examples of the method for producing the carbonate group-containing polyol of the present embodiment will be given below. The method for producing the carbonate group-containing polyol of the present embodiment is not particularly limited and can be performed, for example, at two divided stages. A hydroxy compound and a carbonate compound are mixed at a ratio of, for example, 20:1 to 1:10 in terms of a molar ratio (hydroxy compound : carbonate compound), and a transesterification catalyst is added thereto, if necessary. First-stage reaction is performed at 100 to 250°C under normal pressure or reduced pressure. In the case of using dimethyl carbonate as the carbonate compound, produced methanol can be removed as a mixture with dimethyl carbonate to obtain low-molecular-weight polycarbonate diol. In the case of using diethyl carbonate as the carbonate compound, produced ethanol can be removed as a mixture with diethyl carbonate to obtain low-molecular-weight polycarbonate diol. In the case of using ethylene carbonate as the carbonate compound, produced ethylene glycol can be removed as a mixture with ethylene carbonate to obtain low-molecular-weight polycarbonate diol. Subsequently, second-stage reaction is reaction of heating the first-stage reaction product at 120 to 250°C under reduced pressure so that unreacted diol and carbonate are removed while the low-molecular-weight polycarbonate diol is condensed to obtain polycarbonate diol having a predetermined molecular weight.

A hydroxy compound having a skeleton different from that of the hydroxy compound described above is added to the obtained polycarbonate diol, and a transesterification catalyst is added thereto, if necessary. Reaction can be performed at 100 to 250°C under normal pressure or reduced pressure to further introduce a different structure to the polycarbonate diol. A low-boiling hydroxy compound is removed, if necessary, by heating at 120 to 250°C under reduced pressure while the low-molecular-weight polycarbonate diol can be condensed to obtain polycarbonate diol having a predetermined molecular weight.

[[[Carbonate compound]]]

Examples of the starting material carbonate compound for use in the method for producing the carbonate group-containing polyol of the present embodiment include, but are not particularly limited to: dialkyl carbonate such as dimethyl carbonate, diethyl carbonate, dipropyl carbonate, and dibutyl carbonate; diaryl carbonate such as diphenyl carbonate; and alkylene carbonate such as ethylene carbonate, trimethylene carbonate, 1,2-propylene carbonate, 1,2-butylene carbonate, 1,3-butylene carbonate, and 1,2-pentylene carbonate. Among them, one or two or more carbonates can be used as a starting material for the carbonate group-containing polyol. Dimethyl carbonate, diethyl carbonate, diphenyl carbonate, dibutyl carbonate, or ethylene carbonate is preferably used from the viewpoint of easy availability and easy setting of conditions of polymerization reaction.

[[[Transesterification catalyst]]]

Examples of the transesterification reaction catalyst in the method for producing the carbonate group-containing polyol of the present embodiment include, but are not particularly limited to, alcoholate, hydride, oxide, amide, carbonate, hydroxide, and nitrogen-containing borate of an alkali metals such as lithium, sodium, or potassium or an alkaline earth

metal such as magnesium, calcium, strontium, or barium, and basic alkali metal salts and alkaline earth metal salts of organic acids. Examples of the catalyst also include, but are not particularly limited to, metals, salts, alkoxide, and organic compounds of aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth, or ytterbium. One or more catalysts can be selected therefrom for use. One or more catalysts selected from a metal, a salt, alkoxide, and an organic compound of sodium, potassium, magnesium, potassium, titanium, zirconium, tin, lead, or ytterbium are preferably used because polymerization for the carbonate group-containing polyol is favorably performed and these catalysts have less influence on urethane reaction using the resulting carbonate group-containing polyol. A metal, a salt, alkoxide, or an organic compound of titanium, ytterbium, tin, zirconium, or magnesium is further preferably used as the catalyst.

Hence, the amount of the catalyst remaining in the carbonate group-containing polyol is not particularly limited. As for the metal-based content of the catalyst, the lower limit is preferably 0.00001% by mass or more, more preferably 0.00005% by mass or more, further preferably 0.0001% by mass or more, still further preferably 0.0005% by mass or more. The upper limit is preferably 0.1% by mass or less, more preferably 0.05% by mass or less, further preferably 0.03% by mass or less, still further preferably 0.02% by mass or less, particularly preferably 0.015% by mass or less, more particularly preferably 0.01% by mass or less, exceedingly preferably 0.005% by mass or less.

The transesterification catalyst used in the transesterification reaction is not consumed in the transesterification reaction when heating treatment is performed subsequently to the production of the carbonate group-containing polyol. Therefore, the amount of the catalyst remaining can be calculated on the basis of the amount of the transesterification reaction catalyst used. For example, in the case of using commercially available polycarbonate diol, the amount of a metal in the transesterification reaction catalyst contained in the polycarbonate diol is determined by ICP (inductively coupled plasma) measurement.

The polycarbonate diol for use in the production of the carbonate group-containing polyol may be supplemented with a catalyst poison such as a phosphoric acid ester compound in order to inactivate the transesterification reaction catalyst used in the production thereof.

[[Number-average molecular weight]]

The number-average molecular weight of the carbonate group-containing polyol obtained by the production method of the present embodiment is preferably 300 or larger and 5000 or smaller. When the number-average molecular weight of the carbonate group-containing polyol is 300 or larger, the resulting polyurethane tends to have favorable low-temperature characteristics. When the number-average molecular weight of the carbonate group-containing polyol is 5000 or smaller, the carbonate group-containing polyol for use as a material constituting a coating material is not limited by a coating material solid concentration or the like and tends to not reduce the molding processability of the resulting polyurethane. The number-average molecular weight of the carbonate group-containing polyol is further preferably 450 or larger and 3000 or smaller, especially preferably 500 or larger and 2000 or smaller. The number-average molecular weight is exceedingly preferably 500 or larger and 1500 or smaller from the viewpoint of the viscosity and solvent solubility of the resulting carbonate group-containing polyol. On the other hand, the number-average molecular weight of the carbonate group-containing polyol is preferably 1000 or larger and 5000 or smaller, more preferably 2000 or larger and 4500 or smaller, from the viewpoint of the elongation and flexibility of the resulting polyurethane.

In the present embodiment, the number-average molecular weight can be measured by a method described in Examples mentioned later.

In the carbonate group-containing polyol of the present embodiment, the terminal structure is preferably a terminal structure where one of the ends is bonded to a carbonate group and the other end is bonded to a hydroxy group, a terminal structure where both ends are bonded to carbonate groups, or a terminal structure where both ends are bonded to hydroxy groups.

In the carbonate group-containing polyol of the present embodiment, the terminal structure may be a mixture of a terminal structure where one of the ends is bonded to a carbonate group and the other end is bonded to a hydroxy group, a terminal structure where both ends are bonded to carbonate groups.

[[Melt viscosity at 50°C]]

The melt viscosity at 50°C of the carbonate group-containing polyol of the present embodiment is 500 to 200000 mPa·s, preferably 1000 to 180000 mPa·s, more preferably 1500 to 165000 mPa·s. The melt viscosity at 50°C is 500 mPa·s or more, whereby the resulting polyurethane tends to exhibit enhanced stress, tensile elongation, and chemical resistance. The melt viscosity at 50°C is 180000 mPa·s or less, whereby the resulting composition can exert high adhesive strength because wettability (contact efficiency) to a base material is improved. The composition, when used as an encapsulant starting material, can exert high insulation reliability because packaging to detail is attained.

In the present embodiment, examples of the method for controlling the melt viscosity at 50°C of the carbonate group-containing polyol to the above range include, but are not particularly limited to, the adjustment of an aromatic concentration and a number-average molecular weight. The melt viscosity of the carbonate group-containing polyol tends to be elevated when a starting material ratio is adjusted so as to elevate an aromatic concentration. Likewise, the melt viscosity tends to be elevated when production conditions are adjusted so as to elevate a number-average molecular weight.

In the present embodiment, the melt viscosity can be measured by a method described in Examples mentioned later.

[[Terminal group purity]]

In the carbonate group-containing polyol of the present embodiment, a hydroxy group preferably accounts for 90% by mol or more of the total amount of terminal groups in the whole compound in a composition, more preferably accounts for 92 to 100% by mol of the total amount of terminal groups, and further preferably accounts for 95 to 100% by mol of the total amount of terminal groups.

When the amount of the hydroxy group in the terminal groups falls within the above range, the carbonate group-containing polyol of the present embodiment can form a coating material composition excellent in drying properties and a coating film and/or a polyurethane film excellent in durability.

Examples of the method for controlling the amount of the hydroxy group in the terminal groups in the whole compound of the carbonate group-containing polyol of the present embodiment to the above range include, but are not particularly limited to, a method of using a highly pure starting material in the production of the polycarbonate diol composition, and a method of setting a reaction temperature to 200°C or lower in the production of the polycarbonate diol composition so that the dehydration of terminal hydroxy groups is suppressed.

In the carbonate group-containing polyol of the present embodiment, examples of the terminal group other than a hydroxy group include, but are not particularly limited to, alkyl groups, vinyl groups, and aryl groups.

In the present embodiment, the amount of the hydroxy group in the terminal groups can be measured by use of a method described in Examples mentioned later.

[[Hydroxyl value]]

The lower limit of the hydroxyl value (OH value) of the carbonate group-containing polyol of the present embodiment is preferably 20 mgKOH/g or more, more preferably 30 mgKOH/g or more, further preferably 50 mgKOH/g or more, still further preferably 60 mgKOH/g or more, particularly preferably 70 mgKOH/g or more, exceedingly preferably 74 mgKOH/g or more. The upper limit of the hydroxyl value (OH value) of the carbonate group-containing polyol of the present embodiment is preferably 700 mgKOH/g or less, more preferably 500 mgKOH/g or less, further preferably 400 mgKOH/g or less, still further preferably 350 mgKOH/g or less, particularly preferably 300 mgKOH/g or less, exceedingly preferably 230 mgKOH/g or less. The hydroxyl value of the carbonate group-containing polyol falls the above range, whereby the carbonate group-containing polyol tends to have a low viscosity, excellent handleability, and also excellent compatibility with an organic solvent. Furthermore, polyurethane obtained from such carbonate group-containing polyol tends to exhibit enhanced stress, tensile elongation, and chemical resistance.

Examples of the method for controlling the hydroxyl value of the carbonate group-containing polyol of the present embodiment to the above range include, but are not particularly limited to, a control method of adding and/or extracting an alcohol compound in the production of the carbonate group-containing polyol.

In the present embodiment, the hydroxyl value can be calculated by use of a method described in Examples mentioned later.

[[Aromatic concentration of carbonate group-containing polyol]]

In the carbonate group-containing polyol of the present embodiment, the total weight of aromatic carbon and/or an aromatic heteroatom (aromatic concentration) is preferably 1% by mass or more and 65% by mass or less, more preferably 3% by mass or more and 65% by mass or less, further preferably 5% by mass or more and 60% by mass or less, especially preferably 10% by mass or more and 55% by mass or less, exceedingly preferably 15% by mass or more and 50% by mass or less, particularly preferably 20% by mass or more and 50% by mass or less, further preferably 20% by mass or more and 40% by mass or less, most preferably 20% by mass or more and 30% by mass or less, based on the polyol. The aromatic concentration is equal to or more than the lower limit value, whereby the carbonate group-containing polyol of the present embodiment tends to improve the stress, elongation, chemical resistance, and scratch resistance of the resulting polyurethane. The aromatic concentration is equal to or less than the upper limit value, whereby the carbonate group-containing polyol tends to not only have low viscosity and improved handleability but prevent the resulting

polyurethane from being too rigid, so that the polyurethane has high stress and favorable elongation.

In the case of comprising a structural unit represented by the formula (II) wherein $R_2$ is an aliphatic hydrocarbon group having 2 to 5 carbon atoms, the aromatic concentration of the carbonate group-containing polyol is preferably 10 to 50% by mass. When $R_2$ is an aliphatic hydrocarbon group having 3 carbon atoms, the aromatic concentration of the carbonate group-containing polyol is preferably 10 to 50% by mass, more preferably 10 to 30% by mass. When $R_2$ is an aliphatic hydrocarbon group having 4 carbon atoms, the aromatic concentration of the carbonate group-containing polyol is preferably 10 to 50% by mass, more preferably 10 to 30% by mass, further preferably 20 to 30% by mass. When $R_2$ is an aliphatic hydrocarbon group having 5 carbon atoms, the aromatic concentration of the carbonate group-containing polyol is preferably 10 to 50% by mass, more preferably 10 to 30% by mass, further preferably 20 to 30% by mass. When $R_2$ is an aliphatic hydrocarbon group having 6 carbon atoms, the aromatic concentration of the carbonate group-containing polyol is preferably 10 to 50% by mass, more preferably 20 to 50% by mass. When $R_2$ is an aliphatic hydrocarbon group having 7 to 10 carbon atoms, the aromatic concentration of the carbonate group-containing polyol is preferably 10 to 50% by mass, more preferably 20 to 50% by mass, further preferably 20 to 40% by mass.

Examples of the method for quantifying the aromatic concentration in the carbonate group-containing polyol include, but are not particularly limited to, a method of isolating a starting material diol component by the alkali degradation, if necessary, of the carbonate group-containing polyol, and structurally identifying the component by GC-MS measurement, LC-MS measurement, NMR measurement, and gel permeation chromatography (hereinafter, also referred to as "GPC") measurement, followed by fractionation or separation by, for example, GPC, and a method of performing quantification by NMR measurement, magnetic gradient NMR measurement, GC measurement, and LC measurement. For example, an aromatic ether polyol starting material that forms the formula (I) has a high boiling point and is rarely volatile. Therefore, the aromatic concentration can be calculated from the total weight of aromatic carbon and/or an aromatic heteroatom added for production and the yield of the polyol thus produced.

[[$R_1$ in general formula (I)]]

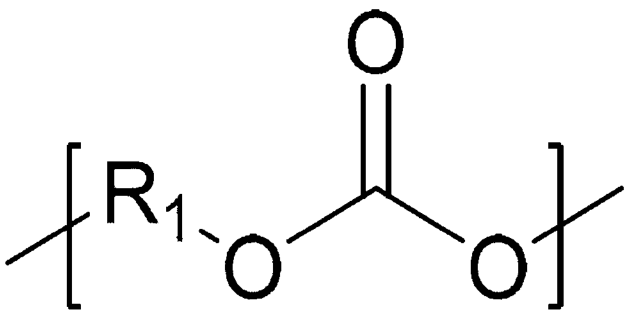

Formula (I)

a) Organic group having two or more aromatic cyclic structures

In the general formula (I), the organic group having two or more aromatic cyclic structures in $R_1$ refers to both of an aromatic ring and an aromatic heterocyclic ring composed of 10 or more atoms of at least one or more members selected from the group consisting of, for example, C (carbon atom), N (nitrogen atom), O (oxygen atom), S (sulfur atom), Si (silicon atom) and a halogen atom such as Cl (chlorine atom), Br (bromine atom), or I (iodine atom), and is preferably composed of carbon, nitrogen, oxygen, and sulfur atoms, more preferably carbon and oxygen atoms. The number of divalent or higher atoms except for hydrogen among the atoms described above is preferably 10 to 300 or less, more preferably 14 to 200, exceedingly preferably 20 or more and 80 or less. The phrase "having two or more aromatic cyclic structures" includes all of the case of having only two or more aromatic rings, the case of having only two or more aromatic heterocyclic rings, the case of having two or more in total of aromatic rings and aromatic heterocyclic rings, the case of having a succession of aromatic rings, as in naphthalene, and the case of having a succession of aromatic rings and aromatic heterocyclic rings. The number of atoms in a divalent or higher branch-free linear organic group present between the two aromatic cyclic structures in the skeleton of $R_1$ is preferably 0 or more and 6 or less, more preferably 0 or more and 4 or less, exceedingly preferably 0 or more and 1 or less. The number falls within this range, whereby polyurethane obtained using the present carbonate group-containing polyol tends to be excellent in mechanical physical properties such as breaking strength, breaking elongation, adhesiveness, and scratch resistance. If the organic group $R_1$ has one aromatic cyclic structure, sufficient mechanical characteristics are difficult to obtain. Therefore, it is preferred to have two or more aromatic cyclic structures. In the organic group $R_1$, the number of aromatic cyclic structures is nor particularly limited and is realistically on the order of 2 to 6, preferably 2 to 4, in view of easy industrial availability.

b) Optional aliphatic hydrocarbon group

In the general formula (I), the aliphatic hydrocarbon group in $R_1$ is, for example, a divalent linear, branched, or cyclic aliphatic hydrocarbon group having 2 or more and 20 or less carbon atoms and optionally containing a heteroatom. A plurality of aliphatic hydrocarbon groups in $R_1$ may be the same as or different from each other. The number of carbon atoms in the divalent linear aliphatic hydrocarbon group in $R_1$ is preferably 2 or more and 20 or less, more preferably 2 or more and 12 or less, further preferably 2 or more and 6 or less, still further preferably 2 or more and 3 or less. The divalent linear aliphatic hydrocarbon group in $R_1$ preferably has 2 or more carbon atoms from the viewpoint of flexibility and abrasion resistance as the physical properties of polyurethane obtained using the carbonate group-containing polyol of the present embodiment. The number of carbon atoms is preferably 20 or less, more preferably 12 or less, especially preferably 6 or less, particularly preferably 4 or less, from the viewpoint of mechanical characteristics of chemical resistance and stress. Particularly, when $R_1$ contains a divalent linear aliphatic hydrocarbon group, polyurethane much superior in flexibility, abrasion resistance, and chemical resistance tends to be obtained. A polyoxyalkylene structure having a repeating unit composed of the aliphatic hydrocarbon group and an ether bond is particularly preferred.

Specific examples of the divalent linear aliphatic hydrocarbon group in $R_1$ include, but are not particularly limited to, an ethylene group, a trimethylene group, a tetramethylene group, a pentamethylene group, a hexamethylene group, a heptylene group, and an octylene group.

The number of carbon atoms in the divalent branched aliphatic hydrocarbon group in $R_1$ is preferably 3 or more and 20 or less, more preferably 3 or more and 12 or less, further preferably 3 or more and 6 or less.

Specific examples of the divalent branched aliphatic hydrocarbon group in $R_1$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group.

The number of carbon atoms in the divalent cyclic aliphatic hydrocarbon group in $R_1$ is preferably 6 or more and 20 or less, more preferably 6 or more and 12 or less, further preferably 6 or more and 8 or less.

Specific examples of the divalent cyclic aliphatic hydrocarbon group in $R_1$ include, but are not particularly limited to, a cyclobutylene group, a cyclopentylene group, a cyclohexylene group, and a cycloheptylene group.

Among them, $R_1$ is preferably a divalent linear, branched, or cyclic aliphatic hydrocarbon group (i.e., an alkylene group) having 2 or more and 20 or less carbon atoms, more preferably a divalent linear aliphatic hydrocarbon group having 2 or more and 6 or less carbon atoms and/or a divalent branched aliphatic hydrocarbon group having 3 or more and 6 or less carbon atoms.

In the general formula (I), $R_1$ has at least one structure wherein the aromatic cyclic structure and the aliphatic hydrocarbon group are linked through an ether bond. In $R_1$, the number of ether bonds is preferably 1 or more and 70 or less, more preferably in the range of 2 or more and 60 or less, further preferably in the range of 2 or more and 30 or less, particularly preferably in the range of 2 or more and 20 or less.

The constituent unit represented by the general formula (I) preferably comprises one or more members selected from the group consisting of a bisphenol A skeleton, a bisphenol F skeleton, a biphenyl skeleton, a fluorene skeleton, a thioether group, a sulfonyl group, and a phosphoric acid ester group, more preferably comprises one or more members selected from the group consisting of a bisphenol A skeleton, a bisphenol F skeleton, a biphenyl skeleton, and a fluorene skeleton, and particularly preferably comprises one or more members selected from the group consisting of a bisphenol A skeleton and a fluorene skeleton. When the constituent unit represented by the formula (I) comprises such a group, polyurethane obtained using the carbonate group-containing polyol of the present embodiment tends to be excellent in mechanical physical properties such as breaking strength, breaking elongation, adhesiveness, and scratch resistance. The starting material for the constituent unit mentioned above can be appropriately selected from industrially easily available starting materials.

[[$R_2$ in general formula (II)]]

The carbonate group-containing polyol of the present embodiment preferably further comprises a constituent unit represented by the following formula (II), in addition to the constituent unit represented by the formula (I):

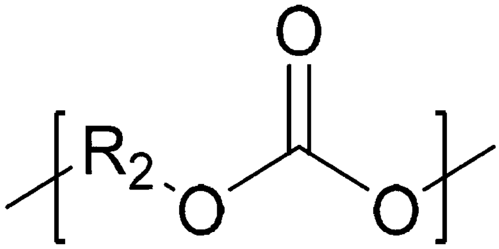

(Formula II)

wherein $R_2$ is an optional aliphatic hydrocarbon group.

In the general formula (II), the aliphatic hydrocarbon group $R_2$ is, for example, a divalent or higher and octavalent or lower linear, branched, or cyclic aliphatic hydrocarbon group having 2 or more and 20 or less carbon atoms and optionally containing a heteroatom. A plurality of $R_2$ moieties may be the same as or different from each other. $R_2$ is preferably divalent or higher and hexavalent or lower because the carbonate group-containing polyol can be stably produced while its gelation is suppressed. $R_2$ is more preferably divalent or higher and trivalent or lower, particularly preferably divalent. $R_2$ is an aliphatic structure having 2 or more and 5 or less carbon atoms, whereby the resulting polyurethane tends to exhibit enhanced mechanical strength such as chemical resistance and breaking strength. When $R_2$ is an aliphatic hydrocarbon group having 3 or more and 5 or less carbon atoms, handleability and wettability tend to be excellent in the form of a coating material or an adhesive blend. In this case, the number-average molecular weight of the carbonate group-containing polyol is preferably 300 or larger and 3000 or smaller, more preferably 300 or larger and 2000 or smaller, further preferably 300 or larger and 1000 or smaller, still further preferably 300 or larger and 800 or smaller, particularly preferably 500 or larger and 800 or smaller, from the viewpoint of the breaking strength and breaking elongation of the resulting polyurethane. Particularly, when $R_2$ is an aliphatic hydrocarbon group having 3 carbon atoms, the number-average molecular weight of the carbonate group-containing polyol is preferably 300 or larger and 2000 or smaller, more preferably 300 or larger and 1500 or smaller, further preferably 300 or larger and 1000 or smaller, still further preferably 300 or larger and 800 or smaller, particularly preferably 500 or larger and 800 or smaller, because breaking strength and bond strength tend to be enhanced. When $R_2$ is an aliphatic hydrocarbon group having 4 carbon atoms, the number-average molecular weight of the carbonate group-containing polyol is preferably 300 or larger and 2000 or smaller, further preferably 300 or larger and 1000 or smaller, still further preferably 300 or larger and 800 or smaller, particularly preferably 500 or larger and 800 or smaller, from the viewpoint of breaking strength and breaking elongation. Particularly, when $R_2$ is an aliphatic hydrocarbon group having 5 carbon atoms, the number-average molecular weight of the carbonate group-containing polyol is preferably 300 or larger and 2000 or smaller, more preferably 300 or larger and 1500 or smaller, further preferably 300 or larger and 1000 or smaller, still further preferably 300 or larger and 800 or smaller, particularly preferably 500 or larger and 800 or smaller, because breaking strength and scratch resistance tend to be enhanced. When $R_2$ is an aliphatic hydrocarbon group having 6 carbon atoms, the number-average molecular weight is preferably 300 or larger and 2000 or smaller, more preferably 300 or larger and 1500 or smaller, further preferably 300 or larger and 1000 or smaller, still further preferably 300 or larger and 800 or smaller, particularly preferably 500 or larger and 800 or smaller, because breaking strength tends to be enhanced. On the other hand, $R_2$ is an aliphatic structure having 7 or more and 20 or less carbon atoms, whereby the resulting polyurethane tends to exhibit enhanced elongation. The number of carbon atoms is more preferably 7 or more and 15 or less, especially preferably 7 or more and 10 or less, from the viewpoint of elongation and chemical resistance. In this case, the number-average molecular weight of the carbonate group-containing polyol is preferably 300 or larger and 3000 or smaller, preferably 500 or larger and 3000 or smaller, more preferably 500 or larger and 2000 or smaller, further preferably 500 or larger and 1000 or smaller, further preferably 500 or larger and 800 or smaller, particularly preferably 500 or larger and 800 or smaller, because the resulting polyurethane tends to exhibit enhanced breaking strength.

$R_2$ preferably has two or more aliphatic structures each having 2 to 20 carbon atoms. Two or more $R_2$ moieties are preferred because the resulting carbonate group-containing polyol tends to have a low viscosity and not only improve the productivity of polyurethane but improve the elongation, flexibility, and scratch resistance of the resulting polyurethane. An adhesive composition obtained using the polyurethane tends to be excellent in adhesive strength and its retention rate after being subjected to a moist heat resistance test (the conditions of the moist heat resistance test are not limited and involve, for example, a temperature of 85°C and a humidity of 85%). The second $R_2$ moiety is more preferably an aliphatic hydrocarbon group having 2 or more and 10 or less carbon atoms, further preferably an aliphatic hydrocarbon group having 2 or more and 6 or less carbon atoms. Particularly, $R_2$ is preferably two or more aliphatic hydrocarbon groups selected from aliphatic hydrocarbon groups having 3 or more and 5 or less carbon atoms because chemical resistance tends to be excellent. $R_2$ is preferably two or more aliphatic hydrocarbon groups selected from aliphatic hydrocarbon groups having 3 or more and 7 or less carbon atoms, further preferably two or more aliphatic hydrocarbon groups selected from aliphatic hydrocarbon groups having 3 or more and 6 or less carbon atoms, because the resulting polyurethane tends to be excellent in both strength and elongation. In this context, specifically, the combination of the numbers of carbon atoms

in the aliphatic hydrocarbon groups to be selected is particularly preferably a combination of 3 and 4, a combination of 3 and 5, a combination of 3 and 6, a combination of 4 and 5, a combination of 4 and 6, or a combination of 5 and 6. $R_2$ is preferably two or more aliphatic hydrocarbon groups selected from aliphatic hydrocarbon groups having 6 or more and 10 or less carbon atoms, further preferably two or more aliphatic hydrocarbon groups selected from aliphatic hydrocarbon groups having 8 or more and 10 or less carbon atoms, because of excellent flexibility. In the case of using two aliphatic hydrocarbon groups as $R_2$, the proportion thereof is preferably 0.01 to 0.99 in terms of a molar ratio because the resulting carbonate group-containing polyol has a low viscosity. The proportion is more preferably 0.05 to 0.095, further preferably 0.1 to 0.9, particularly preferably 0.2 to 0.8, especially preferably 0.3 to 0.7.

[[[When $R_2$ is divalent]]]

The polyol starting material that forms $R_2$ is not particularly limited. For example, one or two or more types of diols can be used from diol having no side chain such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, and 1,14-tetradecanediol, diol having a side chain such as 2-methyl-1, 8-octanediol, 2-ethyl-1,6-hexanediol, 2-methyl-1,3-propanediol, 3-methyl-1,5-pentanediol, 2,4-dimethyl-1,5-pentanediol, 2,4-diethyl-1,5-pentanediol, 2-butyl-2-ethyl-1,3-propanediol, and 2,2-dimethyl-1,3-propanediol, and cyclic diol such as 1,4-cyclohexanedimethanol and 2-bis(4-hydroxycyclohexyl)-propane. Two or more types thereof are preferably used.

[[[Polyfunctional compound as $R_2$]]]

A trivalent or higher polyfunctional compound having 3 or more hydroxyl groups in one molecule, for example, trimethylolethane, trimethylolpropane, hexanetriol, pentaerythritol, ditrimethylolpropane, or dipentaerythritol, may be used as $R_2$. Use of the polyfunctional compound improves the cross-linking density of the resulting polyurethane and improves mechanical characteristics such as chemical resistance, coating film hardness, scratch resistance, and stress. The valence of the polyfunctional compound is preferably trivalent or higher and octavalent or lower, more preferably trivalent or higher and hexavalent or lower, further preferably trivalent or higher and tetravalent or lower. Use of the polyfunctional compound in a large amount might cause gelation by cross-linking the carbonate group-containing polyol during production. Thus, the polyfunctional compound is preferably used in combination with divalent diol containing an aliphatic and/or alicyclic and/or aromatic group or the like. The content of the divalent diol is more preferably 0.01% by mass or more and 20% by mass or less, further preferably 0.01% by mass or more and 10% by mass or less, especially preferably 0.1% by mass or more and 5% by mass or less, based on the total amount of the polyfunctional compound.

The polyol starting material that forms $R_2$ in the formula (II) used in the present embodiment is preferably, for example, 1,3-propanediol, 1,4-butanediol, 1,5-pentanediol, 1,6-hexanediol, 1,7-heptanediol, 1,8-octanediol, 1,9-nonanediol, 1,10-decanediol, 2-methyl-1,3-propanediol, or 3-methyl-1,5-pentanediol, particularly preferably 1,3-propanediol, 1,4-butanediol, 1,5-pentanediol, 1,6-hexanediol, 1,9-nonanediol, 1,10-decanediol, 2-methyl-1,3-propanediol, or 3-methyl-1,5-pentanediol.

In the present embodiment, the composition of $R_2$ in the repeating unit represented by the formula (II) in the carbonate group-containing polyol can be determined by the following method: first, 1 g of a sample is weighed into a 100 ml recovery flask, in which 30 g of ethanol and 4 g of potassium hydroxide are then placed to obtain a mixture. The obtained mixture is heated in an oil bath of 100°C for 1 hour. The mixture is cooled to room temperature, and one to two drops of phenolphthalein are then added as an indicator to the mixture, which is then neutralized with hydrochloric acid. Then, the mixture is refrigerated for 3 hours, and a precipitated salt is filtered off, followed by the analysis of the filtrate by gas chromatography (hereinafter, referred to as GC). The concentrations of each dihydroxy compound are prepared into a calibration curve in advance from each known dihydroxy compound as a standard substance, and the composition of $R_2$ in the repeating unit represented by the formula (II) in the carbonate group-containing polyol can be determined on the basis of the area value of a diol compound obtained by GC analysis.

One example of analysis conditions is as described below.

Apparatus: GC-14B (manufactured by Shimadzu Corp.)

Column: DB-WAX (manufactured by J & W Scientific)

Detector: hydrogen flame ionization detector (FID)

Temperature increase profile: the temperature is kept at 60°C for 5 minutes and then increased to 250°C at 10°C/min

In the present embodiment, $R_1$ in the formula (I) more preferably has a structure represented by the following

formula (III):

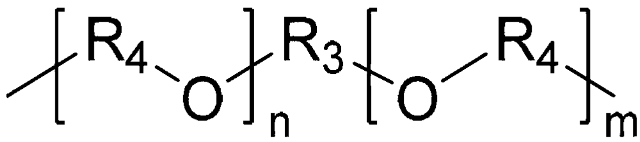 Formula (III)

wherein $R_3$ is an organic group having two or more aromatic cyclic structures, $R_4$ is an optional aliphatic hydrocarbon group, each of n and m is an optional integer including 0, and m + n is 1 or more.

[[$R_3$ in general formula (III)]]

[[Aromatic carbon and/or aromatic heteroatom]]

In the formula (III), $R_3$ is an organic group having two or more aromatic cyclic structures. $R_3$ refers to both of an aromatic ring and an aromatic heterocyclic ring having 10 or more atoms of one or more members selected from the group consisting of, for example, H (hydrogen atom), C (carbon atom), N (nitrogen atom), O (oxygen atom), S (sulfur atom), Si (silicon atom) and a halogen atom such as Cl (chlorine atom), Br (bromine atom), or I (iodine atom), and is preferably composed of hydrogen, carbon, nitrogen, oxygen, and sulfur atoms, more preferably hydrogen, carbon, and oxygen atoms, exceedingly preferably hydrogen and carbon atoms. The number of aromatic carbon atoms and/or heteroatoms in $R_3$ is preferably 10 or more and 40 or less, more preferably 10 or more and 38 or less, further preferably 10 or more and 36 or less, exceedingly preferably 12 or more and 36 or less. When the number of aromatic carbon atoms and/or heteroatoms in $R_3$ is 10 or more, polyurethane obtained using this carbonate group-containing polyol tends to exhibit enhanced mechanical characteristics such as stress, elongation, chemical resistance, and scratch resistance. When the number of aromatic carbon atoms and/or heteroatoms in $R_3$ is 40 or less, the carbonate group-containing polyol is in a liquid state or has a low viscosity and is also excellent in dissolution in a solvent and therefore tends to be excellent in handleability in polyurethane production. The number of atoms in a divalent or higher branch-free linear organic group present between the two aromatic cyclic structures in the skeleton of $R_3$ is preferably 0 or more and 6 or less, more preferably 0 or more and 4 or less, exceedingly preferably 1. The number falls within this range, whereby polyurethane obtained using the present carbonate group-containing polyol tends to be excellent in mechanical characteristics such as breaking strength, breaking elongation, adhesiveness, and scratch resistance. If the organic group $R_3$ has one aromatic cyclic structure, sufficient mechanical characteristics are difficult to obtain. Therefore, it is preferred to have two or more aromatic cyclic structures. In the organic group $R_3$, the number of aromatic cyclic structures is not particularly limited as long as the number is 2 or more. The number is realistically on the order of 2 to 6, preferably 2 to 4, in view of easy industrial availability.

Specifically, the structure of $R_3$ in the formula (III) is, for example, a structure obtained by removing a hydroxyl group (OH group) from a hydroxy compound given below and is not particularly limited. Examples thereof include: bisphenols such as bisphenol A, bisphenol F, bisphenol AD, bisphenol S, tetramethyl bisphenol A, tetramethyl bisphenol F, tetramethyl bisphenol AD, tetramethyl bisphenol S, tetrabromobisphenol A, tetrachlorobisphenol A, and tetrafluorobisphenol A; other divalent phenols such as biphenol, tetramethyl biphenol, dihydroxynaphthalene, 9,9-bis(4-hydroxyphenyl)fluorene, and bis-o-phenylphenoxyethanol fluorene; trisphenols such as 1,1,1-tris(4-hydroxyphenyl)methane and 4,4-(1-(4-(1-(4-hydroxyphenyl)-1-methylethyl)phenyl)ethylidene)bisphenol; and novolacs such as phenol novolac, cresol novolac, bisphenol A novolac, brominated phenol novolac, and brominated bisphenol A novolac.

Among them, $R_3$ in the formula (III) is preferably bisphenol A, bisphenol F, tetramethyl bisphenol A, tetramethyl bisphenol F, biphenol, tetramethylbiphenol, dihydroxynaphthalene, 9,9-bis(4-hydroxyphenyl)fluorene, bis-o-phenylphenoxyethanol fluorene, or 1,1,1-tris(4-hydroxyphenyl)methane, further preferably bisphenol A, bisphenol F, tetramethylbiphenol, dihydroxynaphthalene, 9,9-bis(4-hydroxyphenyl)fluorene, or bis-o-phenylphenoxyethanol fluorene, particularly preferably bisphenol A or 9,9-bis(4-hydroxyphenyl)fluorene.

In the general formula (III), $R_3$ is preferably divalent or higher and octavalent or lower, more preferably divalent or higher and hexavalent or lower, especially preferably divalent or higher and trivalent or lower, exceedingly preferably divalent. The valence falls within such a range, whereby the carbonate group-containing polyol can be stably produced while gelation is suppressed during production. On the other hand, $R_3$ has an aliphatic structure having 7 or more and 20 or less carbon atoms, whereby the resulting polyurethane tends to exhibit enhanced elongation. The number of carbon atoms in $R_3$ is more preferably 7 or more and 15 or less, more preferably 7 or more and 10 or less, from the viewpoint of elongation and chemical resistance.

[[$R_4$ in general formula (III)]]

In the formula (III), $R_4$ is a divalent linear, branched, or cyclic aliphatic hydrocarbon group having 2 or more and 20 or less carbon atoms. A plurality of $R_4$ moieties may be the same as or different from each other. The number of carbon atoms in the divalent linear aliphatic hydrocarbon group in $R_4$ is preferably 2 or more and 20 or less, more preferably 2 or more and 12 or less, further preferably 2 or more and 6 or less, particularly preferably and 2 or more and 3 or less. The divalent linear aliphatic hydrocarbon group in $R_4$ preferably has 2 or more carbon atoms from the viewpoint of flexibility and abrasion resistance as the physical properties of polyurethane obtained using the carbonate group-containing polyol of the present embodiment. The number of carbon atoms in the divalent linear aliphatic hydrocarbon group in $R_4$ is preferably 20 or less, more preferably 12 or less, especially preferably 6 or less, particularly preferably 4 or less, from the viewpoint of mechanical characteristics of chemical resistance and stress.

Specific examples of the divalent linear aliphatic hydrocarbon group in $R_4$ include, but are not particularly limited to, an ethylene group, a trimethylene group, a tetramethylene group, a pentamethylene group, a hexamethylene group, a heptylene group, and an octylene group.

The number of carbon atoms in the divalent branched aliphatic hydrocarbon group in $R_4$ is preferably 3 or more and 20 or less, more preferably 3 or more and 12 or less, further preferably 3 or more and 6 or less.

Specific examples of the divalent branched aliphatic hydrocarbon group in $R_4$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group.

The number of carbon atoms in the divalent cyclic aliphatic hydrocarbon group in $R_4$ is preferably 6 or more and 20 or less, more preferably 6 or more and 12 or less, further preferably 6 or more and 8 or less.

Specific examples of the divalent cyclic aliphatic hydrocarbon group in $R_4$ include, but are not particularly limited to, a cyclobutylene group, a cyclopentylene group, a cyclohexylene group, and a cycloheptylene group.

Among them, $R_4$ is preferably a divalent linear, branched, or cyclic aliphatic hydrocarbon group (i.e., an alkylene group) having 2 or more and 20 or less carbon atoms, more preferably a divalent linear aliphatic hydrocarbon group having 2 or more and 6 or less carbon atoms and/or a divalent branched aliphatic hydrocarbon group having 3 or more and 6 or less carbon atoms. Particularly, when $R_4$ contains a divalent linear aliphatic hydrocarbon group, polyurethane much superior in flexibility, abrasion resistance, and chemical resistance tends to be obtained. Among them, the repeating unit represented by $R_4$ in the formula (III) is preferably a polyoxyalkylene structure.

[[The numbers of repeats, m and n, in formula (III)]]

In the formula (III), m and n each represent the number of repeats. Each of m and n is an optional integer including 0, and m + n is 1 or more. However, in the case of calculating the total value of m and n as an average value of the whole polyol, m + n does not have to be an integer. The total value of m and n in the whole carbonate group-containing polyol of the present embodiment is preferably in the range of 1 or more and 70 or less, more preferably in the range of 2 or more and 60 or less, further preferably in the range of 2 or more and 30 or less, particularly preferably in the range of 2 or more and 20 or less. The total value of the numbers of repeats, m and n, is 1 or more, whereby the resulting polyurethane tends to exhibit enhanced stress, tensile elongation, and chemical resistance. The total value of the numbers of repeats, m and n, is 60 or less, whereby the compatibility of a solvent and other components can be improved in polyurethane production.

Each of m and n is more preferably 1 or more. Each of m and n is 1 or more, whereby the resulting polyurethane tends to exhibit enhanced heat resistance.

The total value of m and n in the carbonate group-containing polyol of the present embodiment is equal to or more than the lower limit value, whereby polyurethane much superior in flexibility and low-temperature flexibility tends to be obtained. The total value of m and n in the carbonate group-containing polyol of the present embodiment is equal to or less than the upper limit value, whereby the resulting carbonate group-containing polyol tends to have a lower viscosity.

The content ratio of the structure represented by the formula (III) can be calculated by subjecting the aforementioned starting material polyol component obtained by the alkali degradation, if necessary, of the carbonate group-containing polyol to identification using GC-MS measurement, LC-MS measurement, or NMR measurement, and preparing a calibration curve in GC using a commercially available standard substance as mentioned above.

In the present embodiment, the structure of the carbonate group-containing polyol can be analyzed by use of NMR measurement, MALDI-MS, or the like.

[Production of polyurethane]

The polyurethane of the present embodiment is a polymerized product of the carbonate group-containing polyol mentioned above and an isocyanate compound.

A method for producing the polyurethane using the carbonate group-containing polyol of the present embodiment (hereinafter, also referred to as a "component (a)") usually employs a curing agent (hereinafter, also referred to as a "component (b)") such as an isocyanate compound (e.g., polyisocyanate), and optionally a chain extender (hereinafter, also referred to as a "component (c)"). The method for producing the polyurethane using the carbonate group-containing polyol of the present embodiment may involve blending the constituting component (a), component (b), and component (c) at once to prepare a mixture as a curable composition (one-shot method) or may involve reacting the component (a) in advance with the component (b) to provide an isocyanate-terminated prepolymer composition, and blending the isocyanate-terminated prepolymer composition with the component (c) to prepare a mixture as a curable composition (prepolymer method). A polyurethane coating film can be produced using a coating film composition obtained by mixing the component (a), the component (b), and optionally other polyols and an organic solvent.

[[Component (B) polyisocyanate]]

Polyisocyanate having 2 to 6 functional groups on average per molecule (component (b)) can usually be used as polyisocyanate for use in the case of producing the polyurethane using the carbonate group-containing polyol of the present embodiment. Examples of the polyisocyanate as the component (b) can include, but are not particularly limited to: aromatic diisocyanate such as 2,4-toluene diisocyanate, 2,6-toluene diisocyanate, and mixtures thereof, diphenylmethane-4,4'-diisocyanate (MDI), naphthalene-1,5-diisocyanate (NDI), 3,3'-dimethyl-4,4'-biphenylene diisocyanate (TODI), and polymethylene polyphenylene polyisocyanate (PMDI); araliphatic diisocyanate such as xylylene diisocyanate (XDI) and phenylene diisocyanate; and aliphatic diisocyanate such as 4,4'-methylene biscyclohexyl diisocyanate (hydrogenated MDI), hexamethylene diisocyanate (HDI), isophorone diisocyanate (IPDI), and cyclohexane diisocyanate (hydrogenated XDI).

Polyisocyanate having 2.1 or more isocyanate groups on average in one molecule may be used as the polyisocyanate as the component (b). The polyisocyanate having 2.1 or more isocyanate groups on average in one molecule is not particularly limited. For example, aromatic polyisocyanate such as crude MDI or crude TDI; a derivative of aliphatic isocyanate such as HDI or IPDI, specifically, a diisocyanate derivative such as biuret, allophanate, uretdione, or isocyanurate; and a polyhydric alcohol adduct form can be used. The polyisocyanate having 2.1 or more isocyanate groups on average in one molecule is available as, for example, but not particularly limited to, SUMIJULE 44S and 44V70 (both manufactured by Sumika Bayer Urethane Co., Ltd.), DESMODUR HL (manufactured by Sumika Bayer Urethane Co., Ltd.) as a copolymer of TDI and HDI, and various DURANATEs manufactured by Asahi Kasei Corp., i.e., DURANATE 24A-100, DURANATE 22A-75PX, DURANATE 18H-70B, DURANATE 21S-75E, DURANATE THA-100, DURANATE TPA-100, DURANATE -TKA100, DURANATE MFA-75X, DURANATE TSA-100, DURANATE TSS-100, DURANATE TSE-100, DURANATE D-101, DURANATE D-201, DURANATE P-301-75E, DURANATE E-402-90T, DURANATE E-402-90T, DURANATE E-405-80T, DURANATE ME20-100, DURANATE 17B-60PX, DURANATE TPA-B80X, DURANATE MF-B60X, DURANATE E-402-B80T, DURANATE ME20-B80S, DURANATE WB40-100, DURANATE WB40-80D, DURANATE WT20-100, and DURANATE WT30-100.

Aromatic polyisocyanate such as MDI is preferably used as the polyisocyanate as the component (b). Use of the aromatic polyisocyanate tends to produce polyurethane excellent in mechanical characteristics. When the aromatic polyisocyanate such as MDI is used as the component (b) in a curable composition, the curable composition can be suitably used as an adhesive between a base cloth and a surface layer of synthetic leather. When aliphatic polyisocyanate such as hydrogenated MDI is used as the component (b) in a curable composition, the curable composition produces synthetic leather excellent in weather resistance and as such, is suitably used as a curable composition for synthetic leather for a surface layer.

So-called blocked isocyanate which is polyisocyanate blocked with a known blocking agent including lower alcohols such as butanol and 2-ethylhexanol, methyl ethyl ketone oxime, lactams, phenols, imidazoles, and active methylene compounds may be used as the component (b).

[[Chain extender (component (c))]]

In the case of producing the polyurethane using the carbonate group-containing polyol of the present embodiment, a chain extender (component (c)) can be optionally used. The chain extender is used for enhancing the abrasion resistance and strength of the resulting polyurethane and, on the other hand, may reduce the flexibility of the resulting polyurethane. Therefore, the chain extender is appropriately used, if necessary. Examples of the chain extender include, but are not particularly limited to: short-chain diols such as ethylene glycol and 1,4-butanediol; and polyhydric alcohols such as trimethylolethane, trimethylolpropane, hexanetriol, pentaerythritol, and glycerin. Examples of the chain extender also include, but are not particularly limited to, diamines such as ethylenediamine, propylenediamine, hexamethylenediamine, tolylenediamine, xylylenediamine, diphenyldiamine, diaminodiphenylmethane, diaminocyclohexylmethane, piperazine, 2-methylpiperazine, isophoronediamine, and 3,3'-dichloro-4,4'-diaminodiphenylmethane (MOCA), and water.

The amount of the chain extender added is preferably 30% by mass or less, more preferably 3% by mass or more and 20% by mass or less, further preferably 5% by mass or more and 15% by mass or less, based on the total amount of the component (a) and the component (b). Use of a polyhydric alcohol as the chain extender can elevate the cross-linking density of the resulting polyurethane and can enhance strength, abrasion resistance, and chemical resistance.

The amounts of the carbonate group-containing polyol as the component (a), the polyisocyanate as the component (b), and the chain extender as the component (c) used are adjusted such that a value of [Isocyanate equivalent of the component (b)] / [Total hydroxy group equivalent of both the component (a) and the component (c)] is preferably 0.7 to 1.3, more preferably 0.8 to 1.2, further preferably 0.9 to 1.1. The value of [Isocyanate equivalent of the component (b)] / [Total hydroxy group equivalent of both the component (a) and the component (c)] is 0.7 or more and 1.3 or less, whereby the molecular weight of the resulting polyurethane can be moderately controlled, and mechanical characteristics such as strength, elongation, and abrasion resistance tend to be excellent.

In the case of producing the polyurethane using the carbonate group-containing polyol of the present embodiment, an inert organic solvent may be involved, if necessary, in order to adjust workability in urethane production. The content of the inert organic solvent is preferably 80% by mass or less, more preferably 70% by mass or less, further preferably 60% by mass or less, based on the polyurethane. The addition of the inert organic solvent is effective for reducing the viscosity of the curable composition and thereby improving its workability and for more improving the appearance of the resulting polyurethane.

[[Inert organic solvent]]

The inert organic solvent is not particularly limited as long as the organic solvent is substantially inert to polyisocyanate. The inert organic solvent preferably has no active hydrogen. Examples of the inert organic solvent include, but are not particularly limited to: hydrocarbons such as pentane, hexane, heptane, octane, decane, petroleum ether, petroleum benzine, ligroin, petroleum spirit, cyclohexane, and methylcyclohexane; inert fluorine-containing liquids such as fluorinated oils such as trichlorofluoroethane, tetrachlorodifluoroethane, and perfluoroether; and perfluorocyclohexane, perfluorobutyltetrahydrofuran, perfluorodecalin, perfluoro-n-butylamine, perfluoropolyether, and dimethylpolysiloxane. These inert organic solvents may be used singly or may be used as a mixture. Further examples of the inert organic solvent include single or mixed solvents of methyl ethyl ketone (also referred to as MEK), acetone, N,N-dimethylformamide (DMF), ethyl acetate, butyl acetate, toluene, and xylene.

In the present specification, the "active hydrogen" refers to a hydrogen atom bonded to an oxygen atom, a sulfur atom, a nitrogen atom, a silicon atom, or the like, and a hydrogen atom of a terminal methine group. The "active hydrogen" is, for example, hydrogen contained in an atomic group such as a -OH group, a -C(=O)OH group, a -C(=O)H group, a -SH group, a $-SO_3H$ group, a $-SO_2H$ group, a -SOH group, a $-NH_2$ group, a -NH- group, a -SiH group, or a -C≡CH group.

In the case of producing the polyurethane using the carbonate group-containing polyol of the present embodiment, a polyol other than the carbonate group-containing polyol may be used, if necessary, in combination therewith. Examples of the polyol other than the carbonate group-containing polyol include, but are not particularly limited to, polyether polyol, polyester polyol, polycarbonate polyol, polyolefin polyol, polybutadiene polyol, polyacrylic polyol, and oil/fat-modified polyol. The amount of the polyol other than the polyester polycarbonate polyol added is preferably 50% by mass or less, more preferably 30% by mass or less, further preferably 20% by mass or less, based on the total mass of the polyester polycarbonate polyol and the polyol other than the polyester polycarbonate polyol.

[[Other additives]]

In the case of producing the polyurethane using the carbonate group-containing polyol of the present embodiment, a curing accelerator (catalyst), a filler, a flame retardant, a dye, an organic or inorganic pigment, a mold release agent, a fluidity adjuster, a plasticizer, an antioxidant, an ultraviolet absorber, a light stabilizer, an antifoaming agent, a leveling agent, a colorant, a foaming agent, or the like can be added depending on various purposes.

Examples of the flatting agent include, but are not particularly limited to, organic fine powders and inorganic fine powders. One of these flatting agents may be used singly, or two or more thereof may be used in combination.

Examples of the organic fine powder include, but are not particularly limited to, cross-linked acrylic resins obtained by polymerization using an unsaturated carboxylic acid alkyl ester monomer and a cross-linking agent, and cross-linked resins obtained by polymerization using an unsaturated nitrile monomer, an aromatic vinyl monomer, and a cross-linking agent.

Examples of the unsaturated carboxylic acid alkyl ester monomer include, but are not particularly limited to, methyl methacrylate, methyl acrylate, ethyl acrylate, and butyl acrylate.

Examples of the unsaturated nitrile monomer include, but are not particularly limited to, acrylonitrile, methacrylonitrile, and ethacrylonitrile.

Examples of the aromatic vinyl monomer include, but are not particularly limited to, styrene and $\alpha$-methylstyrene.

One of these organic fine powders may be used singly, or two or more thereof may be used in combination.

Examples of the inorganic fine powder include, but are not particularly limited to, metal oxide fine powders, silicic acid compound fine powders, carbonic acid metal salt fine powders, nitride fine powders, gypsum fine powders, clay fine powders, talc fine powders, and natural mica fine powders.

Examples of the metal oxide fine powder include, but are not particularly limited to, silicon oxide fine powders, titanium oxide fine powders, aluminum oxide fine powders, and zirconium oxide fine powders.

Examples of the silicic acid compound fine powder include, but are not particularly limited to, aluminum silicate fine powders and magnesium silicate fine powders.

Examples of the carbonic acid metal salt fine powder include, but are not particularly limited to, calcium carbonate fine powders and barium carbonate fine powders.

Examples of the nitride fine powder include, but are not particularly limited to, titanium nitride fine powders and silicon nitride fine powders.

One of these inorganic fine powders may be used singly, or two or more thereof may be used in combination.

Among others, the inorganic fine powder is preferably a silicon oxide fine powder. Examples of the silicon oxide fine powder include hydrous or anhydrous silica fine powders.

Specific examples of such a silica fine powder include, but are not particularly limited to, "ACEMATT OK 412 (trade name)", "ACEMATT OK 607 (trade name)", "ACEMATT OK 900 (trade name)", "ACEMATT TS 100 (trade name)", "ACEMATT OK 520 (trade name)", "ACEMATT 3600 (trade name)", and "ACEMATT 3300 (trade name)" manufactured by Evonik Industries AG.

Examples of the leveling agent include, but are not particularly limited to, silicone, aerosol, wax, stearate, and polysiloxane such as BYK-331 (manufactured by BYK Additives & Instruments).

A conventional thixotropic agent for use in thermosetting resin compositions for cream solder can be used as the thixotropic agent. Specific examples of the thixotropic agent include, but are not particularly limited to, castor oil, hydrogenated castor oil, and sorbitol thixotropic agents.

The content of other additives can be appropriately adjusted according to the type of each additive.

Examples of the filler or the pigment include, but are not particularly limited to, woven fabrics, glass fibers, carbon fibers, polyamide fibers, mica, kaolin, bentonite, metal powders, azo pigments, carbon black, clay, silica, talc, gypsum, alumina white, and barium carbonate.

Examples of the mold release agent, the fluidity adjuster, or the leveling agent include, but are not particularly limited to, silicone, Aerosil, wax, stearate, and polysiloxane such as BYK-331 (manufactured by BYK-Chemie GmbH).

[[Curing accelerator]]

Examples of the curing accelerator include, but are not particularly limited to, amine and metal catalysts. Examples of the amine curing accelerator include, but are not particularly limited to: triethylamine and N,N-dimethylcyclohexylamine as monoamine; tetramethylethylenediamine as diamine; and others such as triamine, cyclic amine, alcohol amine (e.g., dimethylethanolamine), and etheramine. Examples of the metal catalyst include, but are not particularly limited to, potassium acetate, potassium 2-ethylhexanoate, calcium acetate, lead octoate, dibutyltin dilaurate, tin octoate, bismuth neodecanoate, bismuth oxycarbonate, bismuth 2-ethylhexanoate, zinc octoate, zinc neodecanoate, phosphine, and phosphorine.

In the case of producing the polyurethane using the carbonate group-containing polyol of the present embodiment, an antioxidant, a light stabilizer, and a heat stabilizer are preferably used as additives. Examples of the antioxidant that can be used include, but are not particularly limited to: phosphorus compounds such as aliphatic, aromatic, or alkyl group-substituted aromatic ester of phosphoric acid or phosphorus acid, hypophosphorous acid derivatives, phenylphosphonic acid, phenylphosphinic acid, diphenylphosphonic acid, polyphosphonate, dialkyl pentaerythritol diphosphite, and dialkyl bisphenol A diphosphite; phenol derivatives, particularly, hindered phenol compounds; compounds containing sulfur, such as thioether compound, dithioate compounds, mercaptobenzimidazole compounds, thiocarbanilide compounds, and thio dipropionic acid ester; and tin compound such as tin malate and dibutyltin monoxide. These antioxidants may be used singly or may be used in combination of two or more thereof.

[[Production of polyurethane coating film]]

A polyurethane coating film can be obtained by mixing the component (a) which is the carbonate group-containing polyol of the present embodiment with the component (b) which is a curing agent such as the isocyanate compound mentioned above to prepare a coating material composition (mixing step), applying the obtained coating material composition (application step), and further drying the applied coating material composition (drying step). The polyurethane coating film obtained using the carbonate group-containing polyol of the present embodiment can be obtained as a coating film excellent in chemical resistance, scratch resistance, and mechanical strength.

[Mixing step]

The mixing step is the step of mixing the component (a) and the component (b), and optionally the organic solvent, the curing accelerator, other polyols, and/or other additives to obtain a coating material composition.
The content of the solvent in the coating material composition can be, for example, 10% by mass or more and 90% by mass or less, can be, for example, 15% by mass or more and 70% by mass or less, or can be, for example, 20% by mass or more and 50% by mass or less, based on the total mass of the coating material composition.
Specific examples of the mixing method include, but are not particularly limited to, a method of stirring the components at a rotational speed of 50 rpm or more and 1000 rpm or less for 5 minutes or longer and 60 minutes or shorter using a stirrer or the like and then defoaming the mixture using a vacuum defoamer.

[Application step]

In the method for producing a polyurethane coating film according to the present embodiment, the application step is the step of applying the coating material composition.
The method for painting the coating material composition is not particularly limited. For example, a method is used which involves mixing the components immediately before painting, and then applying the mixture to a base material using a spray, a roll, a brush, or the like. Another possible method involves mixing the components other than the curing agent component (b) in advance, adding the component (b) thereto immediately before application, and uniformly mixing these components, followed by application

[Drying step]

In the method for producing a polyurethane coating film according to the present embodiment, the drying step is the step of drying the applied coating material composition to obtain a coating film.
The drying time in the drying step is preferably 5 minutes to 55 minutes after application, more preferably 10 minutes to 50 minutes after application, further preferably 15 minutes to 45 minutes after application, still further preferably 20 minutes to 30 minutes after application. When the drying time falls within the range described above, a coating film much superior in physical properties can be obtained.
The drying temperature in the drying step is preferably 40°C to 200°C, more preferably 50°C to 175°C, further preferably 60°C to 150°C, still further preferably 60°C to 120°C, particularly preferably 60°C to 100°C.
Examples of the drying method in the drying step include, but are not particularly limited to, spontaneous drying, forced drying, and drying by heating.
In the method for producing a polyurethane coating film according to the present embodiment, the thickness of the coating film obtained after the drying is preferably 1 μm to 100 μm, more preferably 2 μm to 90 μm, further preferably 3 μm to 80 μm, still further preferably 5 μm to 50 μm, particularly preferably 10 μm to 50 μm.
The component (b) in the coating material composition is not particularly limited as long as the component (b) works as a curing agent. For example, an isocyanate compound having an isocyanate group reactive with an OH group is used. The average number of NCO functional groups in the isocyanate compound (component (b)) is preferably 2.0 or more, more preferably 2.2 or more, further preferably 2.5 or more, still further preferably 3.0 or more, particularly preferably 3.2 or more, more particularly preferably 3.5 or more. The upper limit of the average number of NCO functional groups in the isocyanate compound (component (b)) is not particularly limited and is, for example, 7.0 or less.
When the average number of NCO functional groups in the isocyanate compound (component (b)) for use in the coating material composition falls within the above range, a coating film much superior in physical properties tends to be obtained. Specifically, when the coating material composition is, for example, a transparent clear coating material composition, a coating film much superior in chemical resistance, scratch resistance, and moist heat resistance can be obtained. When the coating material composition is, for example, a soft-feel coating material composition containing a flatting agent, a coating film much superior in sunscreen resistance and weather resistance can be obtained. The average number of NCO functional groups can be confirmed in accordance with a method for an average number of isocyanate functional groups described in Japanese Patent No. 6538363.
The content of the isocyanate compound (component (b)) in the coating material composition can be appropriately adjusted depending on the molar quantity of a hydroxy group contained in the base agent component (a).
Specifically, the ratio of the mole number of an isocyanate group contained in the isocyanate compound (component (b)) to the mole number of a hydroxy group contained in the component (a) (hereinafter, also referred to as "the mole number of the NCO group / the mole number of the OH group") can be, for example, 0.3 or more and 7.0 or less, can be, for example, 0.5 or more and 5.0 or less, can be, for example, 0.8 or more and 3.0 or less, can be 0.8 or more and 2.5 or less, or can be 0.8 or more and 2.0 or less.
When the mole number of the NCO group / the mole number of the OH group is equal to or more than the lower

limit value described above, a stronger coating film tends to be obtained. On the other hand, when the mole number of the NCO group / the mole number of the OH group is equal to or less than the upper limit value described above, the chemical resistance of a coating film tends to be more improved.

Examples of such a component (b) include, but are not particularly limited to, chain aliphatic diisocyanate, cyclic aliphatic diisocyanate, aromatic diisocyanate, and isocyanate compounds having three or more isocyanate groups, and isocyanurate-modified products and biuret-modified products of these isocyanate compounds.

Among the components (b) mentioned above, aliphatic polyisocyanate is preferably used in the coating material composition. Use of the aliphatic polyisocyanate tends to produce polyurethane excellent in mechanical physical properties and weather resistance.

<Purpose>

The coating material composition of the present embodiment comprises the carbonate group-containing polyol mentioned above and the isocyanate compound. Such a coating material composition can be suitably used in a wide range of fields such as painting of a coating material for automobiles, buses, rail vehicles, building site equipment, agricultural machines, floors, walls or roofs of architectures, metal products, mortar or concrete products, wood products, plastic products, and ceramics construction materials such as calcium silicate boards or plaster boards, etc.

[Leather]

Artificial leather obtained using the polyurethane mentioned above is excellent in durability.

Synthetic leather obtained using the polyurethane mentioned above is excellent in durability.

[Coating film]

A coating film obtained from the coating material composition mentioned above is excellent in durability.

[Film]

A film obtained from the coating material composition mentioned above is excellent in durability.

[Adhesive]

The adhesive of the present embodiment comprises the polyurethane mentioned above. By comprising the polyurethane mentioned above, the adhesive of the present embodiment tends to be excellent in dimensional stability, adhesive force, and durability.

[Coating material]

The coating material of the present embodiment comprises the polyurethane mentioned above. By comprising the polyurethane mentioned above, the coating material of the present embodiment tends to be excellent in adhesion and scratch resistance.

[Encapsulant]

The encapsulant of the present embodiment comprises the polyurethane mentioned above. By comprising the polyurethane mentioned above, the encapsulant of the present embodiment tends to be excellent in dimensional stability and durability.

[Polyurethane composition]

The polyurethane composition of the present embodiment comprises a constituent unit represented by the following formula (I)':

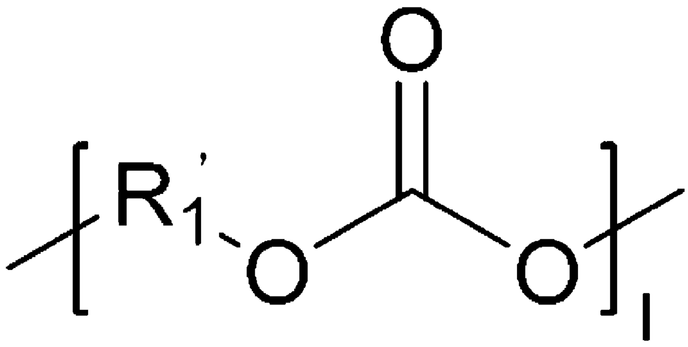

( I )'

wherein $R_1$' is an organic group containing

a') a hydrocarbon group having two or more aromatic cyclic structures, and

b') an ether bond, and

I is an optional integer.

[Composition for adhesive]

The composition for an adhesive of the present embodiment comprises the polyurethane composition mentioned above.

[Second composition for coating material]

The second composition for a coating material of the present embodiment comprises the polyurethane composition mentioned above.

[Composition for encapsulant]

The composition for an encapsulant of the present embodiment comprises the polyurethane composition mentioned above.

**Examples**

Hereinafter, the present embodiment will be described in detail with reference to specific Examples and Comparative Examples. However, the present embodiment is not limited by these examples. Hereinafter, "%" means "% by mass", and "ppm" means "ppm by mass".

<NMR analysis method>

A carbonate group-containing polyol obtained in each of Examples and Comparative Examples mentioned later was used as a sample. 0.3 g of a sample solution was weighed, and 0.7 g of deuterated dimethyl sulfoxide and 0.05 g of an internal standard substance acetonitrile were added thereto and uniformly mixed. The resulting solution was used as an NMR analysis sample. $^1$H-NMR analysis was conducted using JNM-A400 FT-NMR system manufactured by JEOL Ltd. The aromatic concentration in the carbonate group-containing polyol was calculated with 6 to 8 ppm in NMR as an aromatic H peak based on a peak (corresponding to 3H) at 2.07 ppm of the internal standard acetonitrile.

<Number-average molecular weight>

The number-average molecular weight (Mn) of a carbonate group-containing polyol was measured by GPC in accordance with the following method: a carbonate group-containing polyol obtained in each of Examples and Comparative Examples mentioned later was used as a sample. The concentration of the measurement sample was adjusted to 0.5% by mass with tetrahydrofuran (hereinafter, also referred to as "THF"), and the standard polystyrene-based number-average molecular weight (Mn) of the carbonate group-containing polyol was measured using the following GPC

apparatus.

GPC apparatus: HLC-8320 manufactured by Tosoh Corp.

Column: one column of TSKgel G4000H

one column of G3000H

two columns of G2000H

Eluent: tetrahydrofuran (THF)

Flow rate: 1.0 mL/min

Column temperature: 40°C

RI detector: RI (apparatus having built-in HLC-8320)

Calibration curve: standard polystyrene (manufactured by Tosoh Corp.)

F-20 (molecular weight: $1.90 \times 10^5$)

F-10 (molecular weight: $9.64 \times 10^4$)

F-4 (molecular weight: $3.79 \times 10^4$)

F-2 (molecular weight: $1.81 \times 10^4$)

F-1 (molecular weight: $1.02 \times 10^4$)

A-5000 (molecular weight: $5.97 \times 10^3$)

A-2500 (molecular weight: $2.63 \times 10^3$)

A-500

A-1000

Calibration curve expression: third-order polynomial

<Melt viscosity>

A carbonate group-containing polyol obtained in each of Examples and Comparative Examples mentioned later was heated in advance to 50°C. Then, the melt viscosity of the carbonate group-containing polyol was measured at 50°C using an E-type viscometer (manufactured by Toki Sangyo Co., Ltd., TVE-22HT, cone: No. 6). Here, the nature of the carbonate group-containing polyol at 23°C was also confirmed. The nature was assessed as being liquid when the polyol had fluidity in tilting a container containing the polyol.

<Hydroxyl value>

The hydroxyl value of a carbonate group-containing polyol obtained in each of Examples and Comparative Examples mentioned later was measured by the following method: first, a volumetric flask was used, and pyridine was added to 12.5 g of acetic anhydride so as to bring the amount to 50 mL, to prepare an acetylation reagent. Subsequently, in a 100 mL eggplant-shaped flask, 2.5 g of a sample was weighed. Subsequently, to the eggplant-shaped flask, 5 mL of the acetylation reagent and 10 mL of toluene were added with a whole pipette. Then, a condenser was attached to the flask, and the solution in the eggplant-shaped flask was stirred and heated at 100°C for 1 hour. Subsequently, to the eggplant-shaped flask, 2.5 mL of distilled water was added with a whole pipette, and then, the solution in the eggplant-shaped flask

was further heated and stirred for 10 minutes. After cooling of the solution in the eggplant-shaped flask for 2 to 3 minutes, to the eggplant-shaped flask, 12.5 mL of ethanol was added. Subsequently, to the eggplant-shaped flask, 2 to 3 drops of phenolphthalein were added as an indicator, followed by titration with 0.5 mol/L ethanolic potassium hydroxide. Subsequently, in a 100 mL eggplant-shaped flask, 5 mL of the acetylation reagent, 10 mL of toluene and 2.5 mL of distilled water were placed, and the solution in the eggplant-shaped flask was heated and stirred for 10 minutes, followed by titration in the same way as above (blank test). On the basis of the results, the hydroxyl value of the carbonate group-containing polyol was calculated according to the following expression (i):

$$\text{Hydroxyl value (mg-KOH/g)} = \{(F - E) \times 28.05 \times f\} / G \ldots \text{(i)}$$

In the expression (i), E represents the amount of the sample titrated (mL); F represents the amount titrated (mL) in the blank test; G represents the mass of the sample (g); and f represents the factor of the titration solution.

<Proportion of constituent unit in carbonate group-containing polyol>

The proportion of each constituent unit in a carbonate group-containing polyol obtained in each of Examples and Comparative Examples mentioned later was measured as follows.

1 g of the carbonate group-containing polyol was collected into a 100 ml recovery flask, in which 30 g of ethanol and 4 g of potassium hydroxide were further placed, followed by reaction at 100°C for 1 hour. After cooling to room temperature, two to three drops of phenolphthalein were added as an indicator to the recovery flask, the contents of which were then neutralized with hydrochloric acid. Then, the recovery flask was refrigerated for 1 hour, and a precipitated salt was then filtered off to obtain a compositional analysis solution. The obtained compositional analysis solution was analyzed by gas chromatography. The concentrations of each dihydroxy compound were prepared into a calibration curve in advance from each known dihydroxy compound as a standard substance, and % by mass was calculated from an area ratio obtained by gas chromatography (GC). The analysis was conducted using gas chromatography GC-14B (manufactured by Shimadzu Corp.) equipped with DB-WAX (manufactured by J & W Scientific) as a column and using a hydrogen flame ionization detector (FID) as a detector. The temperature increase profile of the column was set to a profile in which the temperature was kept at 60°C for 5 minutes and then increased to 250°C at 10°C/min.

The compositional analysis solution was also analyzed by high-performance liquid chromatography (LC) to analyze an aromatic ether dihydroxy compound. The concentrations of each aromatic ether dihydroxy compound were prepared into a calibration curve in advance using a known substance or a starting material. If a plurality of distributions were present and difficult to separate, a factor was collectively calculated. % by mass was calculated from the area value ratio obtained by LC analysis. The analysis was conducted using high-performance liquid chromatography LC-10AT equipped with Inertsil ODS (particle size: 5 μm, inside diameter: 2.1 mm, length: 250 mm) as a column and using a photodiode array (PDA) as a detector. The molar ratio of the obtained hydroxy compound is described in the tables mentioned later.

Synthesis Example 1 (Synthesis of 1,4-bis(hydroxyethoxy)benzene)

A 500 ml glass round-bottom flask equipped with a rectifying column, a stirrer, a thermometer, and a nitrogen inlet was charged with hydroquinone (22.0 g, 0.2 mol), ethylene glycol (42.2 g, 0.68 mol), sodium carbonate (0.4 g, 3.76 mol), urea (30.0 g, 0.5 mol), and zinc oxide (0.4 g, 4.92 mmol), which were then reacted at 180°C for 3 hours under normal pressure in nitrogen stream with stirring. After the completion of reaction, the reaction solution was cooled to room temperature. A product was extracted with ethyl acetate, and ethyl acetate was distilled off to obtain 1,4-bis(hydroxyethoxy)benzene (38.8 g, yield: 98%) represented by the following formula:

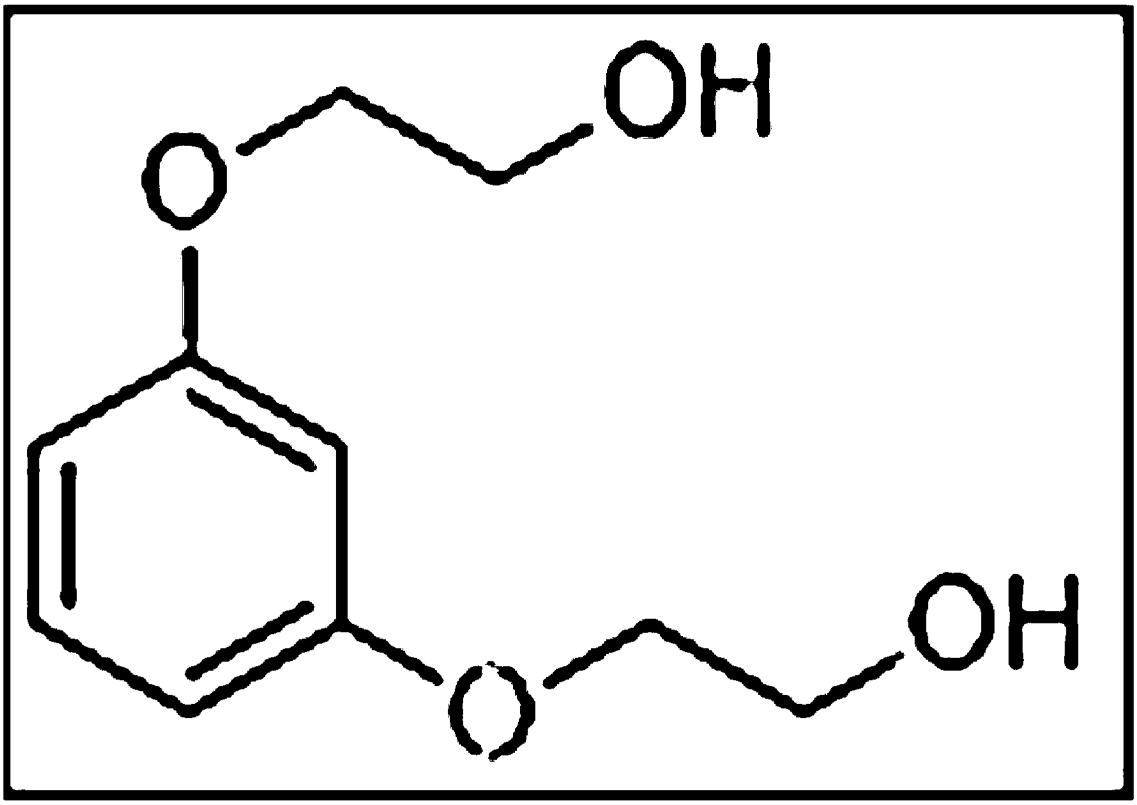

[Example 1 Synthesis of carbonate group-containing polyol P-1]

A 1 L glass flask (hereinafter, also referred to as a "reactor") equipped with a rectifying column packed with a regular packing material, and a stirring apparatus was charged with 74.8 g (0.63 mmol) of 1,5-pentanediol, 65.9 g (0.63 mmol) of 1,6-hexanediol, 280.2 g (0.85 mol) of BPE-20 (Sanyo Chemical Industries, Ltd., bisphenol A-ethylene oxide adduct, average number of moles of addition m + n = 2.3), and 194.4 g (2.0 mmol) of ethylene carbonate (EC). Then, 0.0178 g of titanium tetra-n-butoxide was placed therein as a catalyst. While the reactor was dipped in an oil bath of 170°C and a portion of the distillate was extracted, the mixture was reacted at a reaction temperature of 155°C for 25 hours. Subsequently, the reactor was connected directly to a condenser. The temperature of the oil bath was raised to 170°C. Then, the pressure was gradually lowered, and the reaction was further performed for 5 hours to obtain 585 g of a carbonate group-containing polyol (polycarbonate diol) P-1 which was liquid at ordinary temperature (23°C). The hydroxyl value of the obtained carbonate group-containing polyol P-1 was 228.9 mgKOH/g. The number-average molecular weight of the obtained carbonate group-containing polyol P-1 was 490. The aromatic concentration of the obtained carbonate group-containing polyol P-1 was 26% by mass.

[Examples 2 to 70 and Comparative Examples 1 to 7]

Polycarbonate group-containing polyols P-2 to P-70 and B-1 to B-7 were obtained by the same method as in Example 1 except that the starting material polyols used in Example 1 were changed to the types of starting material polyols and the amounts of the starting material polyols added as described in Tables 1 to 7. The physical properties of the obtained polycarbonate group-containing polyols P-2 to P-70 and B-1 to B-7 were measured by the methods described above. The measurement results were as described in Tables 1 to 7.

Each abbreviation in Tables 1 to 7 is as follows.

Aliphatic hydroxy compound (aliphatic diol) of the formula (1)

DDL: 1,10-decanediol

NDL: 1,9-nonanediol

ODL: 1,8-octanediol

HeDL: 1,7-heptanediol

HDL: 1,6-hexanediol

PDL: 1,5-pentanediol

BDL: 1,4-butanediol

PnDL: 1,3-propanediol

Aromatic hydroxy compound (aromatic diol) of the formula (2)

BPEF: Osaka Gas Chemicals Co., Ltd.: bisphenoxyethanol fluorene

BOPPEF: Osaka Gas Chemicals Co., Ltd.: bis-o-phenylphenoxyethanol fluorene

BP-23P: Sanyo Chemical Industries, Ltd.: bisphenol A-propylene oxide adduct (average number of moles of addition = approximately 2.2)

BP-5P: Sanyo Chemical Industries, Ltd.: bisphenol A-propylene oxide adduct (average number of moles of addition = approximately 5.3)

BPE-20: Sanyo Chemical Industries, Ltd.: bisphenol A-ethylene oxide adduct (average number of moles of addition = approximately 2.3)

BPE-100: Sanyo Chemical Industries, Ltd.: bisphenol A-ethylene oxide adduct (average number of moles of addition = approximately 9.9)

n + m: Average number of moles of addition of aromatic diol

[Table 1]

| Example | | | 1 | 2 | 3 | 4 | 5 | 6 | 7 | 8 | 9 | 10 | 11 | 12 | 13 |
|---|---|---|---|---|---|---|---|---|---|---|---|---|---|---|---|
| Synthesized polyol | | | P-1 | P-2 | P-3 | P-4 | P-5 | P-6 | P-7 | P-8 | P-9 | P-10 | P-11 | P-12 | P-13 |
| Preparation of synthesized polyol | Aromatic diol of formula (2) | Trade name (structure) | BPE-20 | BPE-20 | BPE-20 | BPE-20 | BPE-20 | BPE-20 | BPE-20 | BPE-20 | BPE-20 | BPE-100 | BP-23P | BP-23P | BP-23P |
| | | n + m | 2.3 | 2.3 | 2.3 | 2.3 | 2.3 | 2.3 | 2.3 | 2.3 | 2.3 | 9.9 | 2.2 | 2.2 | 2.2 |
| | | 9 | 280.2 | 280.2 | 431.1 | 334.1 | 431.1 | 194.0 | 905.3 | 646.7 | 474.2 | 479.8 | 211.3 | 211.3 | 211.3 |
| | Aliphatic skeleton of formula (1) | Aliphatic diol ① | PDL | PDL | BDL | HDL | PDL | PDL | PDL | PDL | PDL | PDL | PDL | NDL | HDL |
| | | 9 | 74.8 | 137.6 | 21.0 | 143.7 | 203.5 | 302.1 | 389.0 | 496.6 | 568.4 | 191.3 | 295.5 | 622.0 | 568 |
| | | Aliphatic diol ② | HDL | None | None | None | HDL | HDL | HDL | HDL | HDL | HDL | HDL | None | None |
| | | 9 | 65.9 | None | None | None | 179.3 | 266.3 | 342.8 | 437.7 | 501.0 | 168.6 | 260.5 | None | None |
| | EC | 9 | 194.4 | 157.9 | 84.1 | 148.6 | 367.3 | 479.6 | 714.3 | 836.7 | 918.4 | 320.5 | 469.7 | 370.4 | 452 |
| | Catalyst | 9 | 0.018 | 0.016 | 0.006 | 0.012 | 0.040 | 0.056 | 0.077 | 0.094 | 0.106 | 0.036 | 0.055 | 0.053 | 0.054 |
| | Mixing ratio (% by mass) | Aromatic diol | 49% | 49% | 80% | 60% | 36% | 16% | 39% | 27% | 19% | 41% | 17% | 18% | 17% |
| | | Aliphatic diol ① | 12% | 24% | 4% | 18% | 17% | 24% | 16% | 20% | 23% | 16% | 23% | 52% | 46% |
| | | Aliphatic diol ② | 11% | None | None | None | 15% | 21% | 15% | 18% | 20% | 15% | 21% | None | None |

(continued)

| Example | | | 1 | 2 | 3 | 4 | 5 | 6 | 7 | 8 | 9 | 10 | 11 | 12 | 13 |
|---|---|---|---|---|---|---|---|---|---|---|---|---|---|---|---|
| Synthesized polyol | | | P-1 | P-2 | P-3 | P-4 | P-5 | P-6 | P-7 | P-8 | P-9 | P-10 | P-11 | P-12 | P-13 |
| Synthesized polyol physical properties | Aromatic concentration | wt% | 26% | 26% | 40% | 26% | 20% | 9% | 21% | 15% | 11% | 11% | 9% | 9% | 9% |
| | Molecular weight | Mn | 490 | 492 | 494 | 491 | 998 | 1020 | 1951 | 1962 | 1968 | 1019 | 1031 | 1013 | 1019 |
| | Nature at 23°C | - | Liquid | Liquid | Liquid | Liquid | Liquid | Liquid | Liquid | Liquid | Liquid | Liquid | Liquid | Liquid | Liquid |
| | Melt viscosity at 50°C | mPa·s | 1791 | 2040 | 34000 | 2830 | 12495 | 3214 | 164100 | 57155 | 31900 | 1094 | 3300.5 | 3720 | 3670 |
| | Hydroxyl value | mg-KOH/g | 228.9 | 227.9 | 227.3 | 228.5 | 112.4 | 110.0 | 57.5 | 57.2 | 57.0 | 110.1 | 108.8 | 110.8 | 110.1 |
| | Compositional ratio after hydrolysis molar ratio | Aromatic diol | 0.43 | 0.42 | 0.86 | 0.44 | 0.30 | 0.11 | 0.32 | 0.20 | 0.14 | 0.20 | 0.11 | 0.14 | 0.12 |
| | | Aliphatic diol ① | 0.29 | 0.58 | 0.14 | 0.56 | 0.35 | 0.44 | 0.34 | 0.40 | 0.43 | 0.40 | 0.44 | 0.86 | 0.88 |
| | | Aliphatic diol ② | 0.29 | None | None | None | 0.35 | 0.44 | 0.34 | 0.40 | 0.43 | 0.40 | 0.44 | None | None |

[Table 2]

| Example | | | 14 | 15 | 16 | 17 | 18 | 19 | 20 | 21 | 22 | 23 | 24 | 25 |
|---|---|---|---|---|---|---|---|---|---|---|---|---|---|---|
| Synthesized polyol | | | P-14 | P-15 | P-16 | P-17 | P-18 | P-19 | P-20 | P-21 | P-22 | P-23 | P-24 | P-25 |
| Preparation of synthesized polyol | Aromatic diol of formula (2) | Trade name (structure) | BP-23P | BP-23P | BP-23P | BP-23P | BP-5P | BPEF | BPEF | BPEF | BOPPEF | BOPPEF | BPE-20 | BPE-20 |
| | | n + m | 2.2 | 2.2 | 2.2 | 2.2 | 5.3 | 2 | 2 | 2 | 2 | 2 | 2.3 | 2.3 |
| | | 9 | 211.3 | 211.3 | 211.3 | 469.5 | 351.0 | 273.7 | 144.1 | 72.0 | 452.8 | 323.4 | 819.1 | 646.7 |
| | Aliphatic skeleton of formula (1) | Aliphatic diol ① | PDL | BDL | PnDL | PDL | PDL | PDL | PDL | PDL | PDL | PnDL | HDL | HDL |
| | | 9 | 543.3 | 514.8 | 480.0 | 166.4 | 212.7 | 239.1 | 285.7 | 311.6 | 177.3 | 100.1 | 816.1 | 586.2 |
| | | Aliphatic diol ② | None | None | None | HDL | HDL | HDL | HDL | HDL | HDL | None | None | None |
| | | 9 | None | None | None | 241.3 | 271.3 | 324.1 | 353.5 | 201.1 | 50.0 | None | None | None |
| | EC | 9 | 488.7 | 531.7 | 584.1 | 345.4 | 392.0 | 435.1 | 499.7 | 535.6 | 337.3 | 142.4 | 729.9 | 532.9 |
| | Catalyst | 9 | 0.055 | 0.056 | 0.057 | 0.037 | 0.045 | 0.050 | 0.059 | 0.064 | 0.038 | 0.013 | 0.082 | 0.060 |
| | Mixing ratio (% by mass) | Aromatic diol | 17% | 17% | 17% | 40% | 29% | 22% | 11% | 6% | 39% | 57% | 35% | 37% |
| | | Aliphatic diol ① | 44% | 41% | 38% | 14% | 17% | 19% | 23% | 24% | 15% | 18% | 35% | 33% |
| | | Aliphatic diol ② | None | None | None | 16% | 20% | 22% | 26% | 28% | 17% | None | None | None |

(continued)

| Example | | | 14 | 15 | 16 | 17 | 18 | 19 | 20 | 21 | 22 | 23 | 24 | 25 |
|---|---|---|---|---|---|---|---|---|---|---|---|---|---|---|
| Synthesized polyol | | | P-14 | P-15 | P-16 | P-17 | P-18 | P-19 | P-20 | P-21 | P-22 | P-23 | P-24 | P-25 |
| Synthesized polyol physical properties | Aromatic concentration | wt% | 9% | 9% | 9% | 20% | 10% | 19% | 10% | 5% | 35% | 50% | 19% | 20% |
| | Molecular weight | Mn | 1022 | 1025 | 1047 | 1019 | 1098 | 960 | 978 | 988 | 1066 | 494 | 1979 | 1537 |
| | Nature at 23°C | - | Liquid | Liquid | Liquid | Liquid | Liquid | Liquid | Liquid | Liquid | Liquid | Liquid | Liquid | Liquid |
| | Melt viscosity at 50°C | mPa·s | 3750 | 3890 | 4300 | 12165 | 2319.5 | 11465 | 3477 | 2173 | 146000 | 158000 | 182000 | 50800 |
| | Hydroxyl value | mg-KOH/g | 109.8 | 109.5 | 107.2 | 110.1 | 102.2 | 116.9 | 114.7 | 113.6 | 105.3 | 227.2 | 56.7 | 73.0 |
| | Compositional ratio after hydrolysis molar ratio | Aromatic diol | 0.11 | 0.10 | 0.09 | 0.31 | 0.15 | 0.13 | 0.06 | 0.03 | 0.20 | 0.31 | 0.28 | 0.30 |
| | | Aliphatic diol ① | 0.89 | 0.90 | 0.91 | 0.34 | 0.42 | 0.44 | 0.47 | 0.49 | 0.40 | 0.69 | 0.72 | 0.70 |
| | | Aliphatic diol ② | None | None | None | 0.34 | 0.42 | 0.44 | 0.47 | 0.49 | 0.40 | None | None | None |

[Table 3]

| Example | | | 26 | 27 | 28 | 29 | 30 | 31 | 32 | 33 | 34 | 35 | 36 | 37 |
|---|---|---|---|---|---|---|---|---|---|---|---|---|---|---|
| Synthesized polyol | | | P-26 | P-27 | P-28 | P-29 | P-30 | P-31 | P-32 | P-33 | P-34 | P-35 | P-36 | P-37 |
| Preparation of synthesized polyol | Aromatic diol of formula (2) | Trade name (structure) | BPE-20 | BPE-20 | BPE-20 | BPE-20 | BOPPEF | BP-23 | BPE-20 | BPE-20 | BPE-20 | BPE-20 | BPE-20 | BPE-20 |
| | | n + m | 2.3 | 2.3 | 2.3 | 2.3 | 2 | 2.2 | 2.3 | 2.3 | 2.3 | 2.3 | 2.3 | 2.3 |
| | | 9 | 280.2 | 280.2 | 431.1 | 431.1 | 323.4 | 211.3 | 155.2 | 344.9 | 431.1 | 215.6 | 689.8 | 323.3 |
| | Aliphatic skeleton of formula (1) | Aliphatic diol ① | HDL | HDL | BDL | BDL | PnDL | PnDL | BDL | BDL | BDL | BDL | BDL | PnDL |
| | | 9 | 14.1 | 118.5 | 9.1 | 8.7 | 43.2 | 197.7 | 382.8 | 257.8 | 322.2 | 161.1 | 30.5 | 84.0 |
| | | Aliphatic diol ② | PDL | PDL | PDL | HDL | BDL | PDL | None | None | None | None | None | None |
| | | 9 | 111.6 | 11.6 | 10.5 | 11.4 | 51.2 | 270.2 | None | None | None | None | None | None |
| | EC | 9 | 142.6 | 135.9 | 75.7 | 74.9 | 124.2 | 483.6 | 394.9 | 298.2 | 372.7 | 186.4 | 122.4 | 140.6 |
| | Catalyst | 9 | 0.016 | 0.016 | 0.006 | 0.006 | 0.013 | 0.056 | 0.045 | 0.033 | 0.041 | 0.020 | 0.009 | 0.013 |
| | Mixing ratio (% by mass) | Aromatic diol | 49% | 49% | 80% | 80% | 57% | 17% | 15% | 36% | 36% | 36% | 80% | 57% |
| | | Aliphatic diol ① | 3% | 23% | 2% | 2% | 8% | 17% | 42% | 30% | 30% | 30% | 4% | 16% |
| | | Aliphatic diol ② | 21% | 2% | 2% | 2% | 10% | 24% | None | None | None | None | None | None |

(continued)

| Example | | | 26 | 27 | 28 | 29 | 30 | 31 | 32 | 33 | 34 | 35 | 36 | 37 |
|---|---|---|---|---|---|---|---|---|---|---|---|---|---|---|
| Synthesized polyol | | | P-26 | P-27 | P-28 | P-29 | P-30 | P-31 | P-32 | P-33 | P-34 | P-35 | P-36 | P-37 |
| Synthesized polyol physical properties | Aromatic concentration | wt% | 26% | 26% | 40% | 40% | 50% | 9% | 9% | 20% | 20% | 20% | 40% | 30% |
| | Molecular weight | Mn | 500 | 500 | 500 | 500 | 500 | 994 | 805 | 812 | 1014 | 509 | 803 | 503 |
| | Nature at 23°C | - | Liquid | Liquid | Liquid | Liquid | Liquid | Liquid | Liquid | Liquid | Liquid | Liquid | Liquid | Liquid |
| | Melt viscosity at 50°C | mPa·s | 1840 | 2392 | 24500 | 27810 | 126400 | 3330 | 3090 | 11350 | 16300 | 2012 | 83200 | 117000 |
| | Hydroxyl value | mg-KOH/g | 224.4 | 224.4 | 224.4 | 224.4 | 224.4 | 112.9 | 139.4 | 138.2 | 110.7 | 220.4 | 139.7 | 223.1 |
| | Compositional ratio after hydrolysis molar ratio | Aromatic diol | 0.42 | 0.43 | 0.87 | 0.87 | 0.33 | 0.10 | 0.10 | 0.27 | 0.27 | 0.27 | 0.86 | 0.47 |
| | | Aliphatic diol ① | 0.06 | 0.51 | 0.07 | 0.06 | 0.34 | 0.45 | 0.90 | 0.73 | 0.73 | 0.73 | 0.14 | 0.53 |
| | | Aliphatic diol ② | 0.52 | 0.06 | 0.07 | 0.06 | 0.34 | 0.45 | None | None | None | None | None | None |

[Table 4]

| Example | | | 38 | 39 | 40 | 41 | 42 | 43 | 44 | 45 | 46 | 47 | 48 | 49 | 50 |
|---|---|---|---|---|---|---|---|---|---|---|---|---|---|---|---|
| Synthesized polyol | | | P-38 | P-39 | P-40 | P-41 | P-42 | P-43 | P-44 | P-45 | P-46 | P-47 | P-48 | P-49 | P-50 |
| Preparation of synthesized polyol | Aromatic diol of formula (2) | Trade name (structure) | BPE-20 | BPE-20 | BPE-20 | BPE-20 | BPE-20 | BPE-20 | BPE-20 | BPE-20 | BPE-20 | BPE-20 | BPE-20 | BPE-20 | BPE-20 |
| | | n + m | 2.3 | 2.3 | 2.3 | 2.3 | 2.3 | 2.3 | 2.3 | 2.3 | 2.3 | 2.3 | 2.3 | 2.3 | 2.3 |
| | | 9 | 431.1 | 388.0 | 204.8 | 107.8 | 107.8 | 323.3 | 194.0 | 431.1 | 431.1 | 819.1 | 107.8 | 323.3 | 194.0 |
| | Aliphatic skeleton of formula (1) | Aliphatic diol ① | PnDL | HDL | HDL | HDL | HeDL | HeDL | HeDL | HeDL | HeDL | HeDL | ODL | ODL | ODL |
| | | 9 | 300.4 | 386.6 | 185.5 | 255.9 | 265.4 | 103.0 | 547.0 | 368.4 | 1061.6 | 769.3 | 273.4 | 106.1 | 563.6 |
| | | Aliphatic diol ② | None | None | None | None | None | None | None | None | None | None | None | None | None |
| | | 9 | None | None | None | None | None | None | None | None | None | None | None | None | None |
| | EC | 9 | 405.5 | 340.6 | 165.9 | 205.5 | 191.2 | 112.0 | 390.4 | 303.2 | 765.0 | 622.3 | 179.1 | 107.3 | 365.5 |
| | Catalyst | 9 | 0.041 | 0.043 | 0.021 | 0.027 | 0.027 | 0.013 | 0.055 | 0.039 | 0.107 | 0.081 | 0.026 | 0.012 | 0.054 |
| | Mixing ratio (% by mass) | Aromatic diol | 36% | 33% | 35% | 18% | 18% | 58% | 16% | 37% | 18% | 35% | 18% | 58% | 16% |
| | | Aliphatic diol ① | 27% | 36% | 35% | 46% | 48% | 20% | 49% | 35% | 48% | 36% | 50% | 21% | 51% |
| | | Aliphatic diol ② | None | None | None | None | None | None | None | None | None | None | None | None | None |

(continued)

| Example | | | 38 | 39 | 40 | 41 | 42 | 43 | 44 | 45 | 46 | 47 | 48 | 49 | 50 |
|---|---|---|---|---|---|---|---|---|---|---|---|---|---|---|---|
| Synthesized polyol | | | P-38 | P-39 | P-40 | P-41 | P-42 | P-43 | P-44 | P-45 | P-46 | P-47 | P-48 | P-49 | P-50 |
| Synthesized polyol physical properties | Aromatic concentration | wt% | 20% | 18% | 19% | 10% | 10% | 30% | 9% | 20% | 10% | 19% | 10% | 30% | 9% |
| | Molecular weight | Mn | 1003 | 1006 | 503 | 499 | 496 | 498 | 1000 | 1001 | 2008 | 2003 | 502 | 498 | 1021 |
| | Nature at 23°C | - | Liquid | Liquid | Liquid | Liquid | Liquid | Liquid | Liquid | Liquid | Liquid | Liquid | Liquid | Liquid | Liquid |
| | Melt viscosity at 50°C | mPa·s | 18600 | 13200 | 2200 | 1001 | 978 | 3120 | 3250 | 13700 | 33300 | 158000 | 952 | 2980 | 3110 |
| | Hydroxyl value | mg-KOH/g | 111.9 | 111.5 | 223.1 | 224.8 | 226.2 | 225.3 | 112.2 | 112.1 | 55.9 | 56.0 | 223.5 | 225.3 | 109.9 |
| | Compositional ratio after hydrolysis molar ratio | Aromatic diol | 0.25 | 0.27 | 0.28 | 0.13 | 0.14 | 0.56 | 0.13 | 0.32 | 0.14 | 0.30 | 0.15 | 0.58 | 0.13 |
| | | Aliphatic diol ① | 0.75 | 0.73 | 0.72 | 0.87 | 0.86 | 0.44 | 0.87 | 0.68 | 0.86 | 0.70 | 0.85 | 0.42 | 0.87 |
| | | Aliphatic diol ② | None | None | None | None | None | None | None | None | None | None | None | None | None |

[Table 5]

| Example | | | 51 | 52 | 53 | 54 | 55 | 56 | 57 | 58 | 59 | 60 | 61 | 62 |
|---|---|---|---|---|---|---|---|---|---|---|---|---|---|---|
| Synthesized polyol | | | P-51 | P-52 | P-53 | P-54 | P-55 | P-56 | P-57 | P-58 | P-59 | P-60 | P-61 | P-62 |
| Preparation of synthesized polyol | Aromatic diol of formula (2) | Trade name (structure) | BPE-20 | BPE-20 | BPE-20 | BPE-20 | BPE-20 | BPE-20 | BPE-20 | BPE-20 | BPE-20 | BPE-20 | BPE-20 | BPE-20 |
| | | n + m | 2.3 | 2.3 | 2.3 | 2.3 | 2.3 | 2.3 | 2.3 | 2.3 | 2.3 | 2.3 | 2.3 | 2.3 |
| | | 9 | 431.1 | 431.1 | 819.1 | 107.8 | 323.3 | 194.0 | 431.1 | 431.1 | 819.1 | 107.8 | 323.3 | 431.1 |
| | Aliphatic skeleton of formula (1) | Aliphatic diol ① | ODL | ODL | ODL | DDL | DDL | DDL | DDL | DDL | DDL | NDL | NDL | NDL |
| | | 9 | 379.6 | 1093.8 | 792.6 | 286.6 | 111.2 | 590.8 | 397.9 | 1146.5 | 830.8 | 280.5 | 108.8 | 389.3 |
| | | Aliphatic diol ② | None | None | None | None | None | None | None | None | None | None | None | None |
| | | 9 | None | None | None | None | None | None | None | None | None | None | None | None |
| | EC | 9 | 286.4 | 716.5 | 587.2 | 159.3 | 99.6 | 324.6 | 258.9 | 637.2 | 529.7 | 168.6 | 103.2 | 271.8 |
| | Catalyst | 9 | 0.039 | 0.106 | 0.081 | 0.026 | 0.012 | 0.054 | 0.038 | 0.104 | 0.080 | 0.026 | 0.012 | 0.039 |
| | Mixing ratio (% by mass) | Aromatic diol | 37% | 18% | 35% | 18% | 58% | 16% | 37% | 18% | 35% | 18% | 58% | 37% |
| | | Aliphatic diol ① | 36% | 50% | 37% | 53% | 22% | 54% | 38% | 53% | 39% | 51% | 22% | 37% |
| | | Aliphatic diol ② | None | None | None | None | None | None | None | None | None | None | None | None |

(continued)

| Example | | | 51 | 52 | 53 | 54 | 55 | 56 | 57 | 58 | 59 | 60 | 61 | 62 |
|---|---|---|---|---|---|---|---|---|---|---|---|---|---|---|
| Synthesized polyol | | | P-51 | P-52 | P-53 | P-54 | P-55 | P-56 | P-57 | P-58 | P-59 | P-60 | P-61 | P-62 |
| Synthesized polyol physical properties | Aromatic concentration | wt% | 20% | 10% | 19% | 10% | 30% | 9% | 20% | 10% | 19% | 10% | 30% | 20% |
| | Molecular weight | Mn | 1010 | 2031 | 2042 | 511 | 490 | 993 | 985 | 2027 | 2013 | 513 | 506 | 997 |
| | Nature at 23°C | - | Liquid | Liquid | Liquid | Liquid | Liquid | Liquid | Liquid | Liquid | Liquid | Liquid | Liquid | Liquid |
| | Melt viscosity at 50°C | mPa·s | 12900 | 32500 | 153000 | 937 | 3020 | 3650 | 11900 | 31000 | 148300 | 942 | 3090 | 12600 |
| | Hydroxyl value | mg-KOH/g | 111.1 | 55.2 | 54.9 | 219.6 | 229.0 | 113.0 | 113.9 | 55.4 | 55.7 | 218.7 | 221.7 | 112.5 |
| | Compositional ratio after hydrolysis molar ratio | Aromatic diol | 0.34 | 0.15 | 0.32 | 0.17 | 0.61 | 0.15 | 0.37 | 0.17 | 0.34 | 0.16 | 0.59 | 0.35 |
| | | Aliphatic diol ① | 0.66 | 0.85 | 0.68 | 0.83 | 0.39 | 0.85 | 0.63 | 0.83 | 0.66 | 0.84 | 0.41 | 0.65 |
| | | Aliphatic diol ② | None | None | None | None | None | None | None | None | None | None | None | None |

[Table 6]

| Example | | | 63 | 64 | 65 | 66 | 67 | 68 | 69 | 70 |
|---|---|---|---|---|---|---|---|---|---|---|
| Synthesized polyol | | | P-63 | P-64 | P-65 | P-66 | P-67 | P-68 | P-69 | P-70 |
| Preparation of synthesized polyol | Aromatic diol of formula (2) | Trade name (structure) | BPE-20 | BPE-20 | BPE-20 | BPE-20 | BPE-20 | BPE-20 | BPE-20 | BPE-20 |
| | | n + m | 2.3 | 2.3 | 2.3 | 2.3 | 2.3 | 2.3 | 2.3 | 2.3 |
| | | 9 | 431.1 | 819.1 | 646.7 | 970.0 | 970.0 | 970.0 | 862.2 | 862.2 |
| | Aliphatic skeleton of formula (1) | Aliphatic diol ① | NDL | NDL | HDL | HDL | HDL | HDL | HDL | HDL |
| | | g | 1121.9 | 812.9 | 277.5 | 677.2 | 154.1 | 1298.0 | 84.2 | 709.1 |
| | | Aliphatic diol ② | None | None | PDL | PDL | PDL | PDL | PDL | PDL |
| | | 9 | None | None | 244.5 | 596.9 | 1222.2 | 127.1 | 667.6 | 69.4 |
| | EC | 9 | 674.3 | 556.6 | 500.9 | 1141.0 | 1293.1 | 1219.5 | 755.4 | 715.2 |
| | Catalyst | 9 | 0.105 | 0.080 | 0.060 | 0.141 | 0.142 | 0.141 | 0.080 | 0.079 |
| | Mixing ratio (% by mass) | Aromatic diol | 18% | 35% | 36% | 27% | 27% | 27% | 36% | 37% |
| | | Aliphatic diol ① | 51% | 38% | 17% | 21% | 4% | 36% | 4% | 30% |
| | | Aliphatic diol ② | None | None | 15% | 18% | 34% | 4% | 28% | 3% |
| Synthesized polyol physical properties | Aromatic concentration | wt% | 10% | 19% | 20% | 15% | 15% | 15% | 20% | 20% |
| | Molecular weight | Mn | 2013 | 1987 | 1530 | 2930 | 3006 | 3024 | 2014 | 2011 |
| | Nature at 23°C | - | Liquid | Liquid | Liquid | Liquid | Liquid | Liquid | Liquid | Liquid |
| | Melt viscosity at 50°C | mPa·s | 31900 | 149000 | 38000 | 195000 | 198000 | 191000 | 168200 | 173000 |
| | Hydroxyl value | mg-KOH/g | 55.7 | 56.5 | 73.3 | 38.3 | 37.3 | 37.1 | 55.7 | 55.8 |
| | Compositional ratio after hydrolysis molar ratio | Aromatic diol | 0.16 | 0.33 | 0.30 | 0.20 | 0.20 | 0.21 | 0.29 | 0.30 |
| | | Aliphatic diol ① | 0.84 | 0.67 | 0.35 | 0.40 | 0.08 | 0.71 | 0.07 | 0.63 |
| | | Aliphatic diol ② | None | None | 0.35 | 0.40 | 0.72 | 0.08 | 0.64 | 0.07 |

[Table 7]

| Comparative Example | | | 1 | 2 | 3 | 4 | 5 | 6 | 7 |
|---|---|---|---|---|---|---|---|---|---|
| Synthesized polyol | | | B-1 | B-2 | B-3 | B-4 | B-5 | B-6 | B-7 |
| Preparation of synthesized polyol | Aromatic diol of formula (2) | Trade name (structure) | BOPPEF | None | None | | 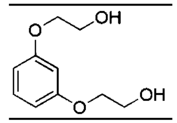 | None | None |
| | | n+m | 2 | 0 | 0 | 0 | 2 | 0 | 0 |
| | | 9 | 452.8 | 0.0 | 0.0 | 0.0 | 520.9 | 0.0 | 0.0 |
| | Aliphatic skeleton of formula (1) | Aliphatic diol ① | PnDL | PDL | PDL | PDL | PDL | PDL | PDL |
| | | g | 16 | 675 | 337 | 172 | 136 | 506 | 1012 |
| | | Aliphatic diol ② | None | HDL | HDL | HDL | HDL | HDL | HDL |
| | | 9 | None | 766 | 383 | 196 | 155 | 574 | 1149 |
| | EC | 9 | 55 | 1143 | 571 | 292 | 358 | 857 | 1714 |
| | Catalyst | 9 | 0.004 | 0.137 | 0.069 | 0.035 | 0.035 | 0.103 | 0.206 |
| | Mixing ratio (% by mass) | Aromatic diol | 86% | 0% | 0% | 0% | 45% | 0% | 0% |
| | | Aliphatic diol ① | 3% | 26% | 26% | 26% | 11% | 26% | 26% |
| | | Aliphatic diol ② | None | 30% | 30% | 30% | 13% | 30% | 30% |
| Synthesized polyol physical properties | Aromatic concentration | wt% | 70% | 0% | 0% | 0% | 20% | 0% | 0% |
| | Molecular weight | Mn | 489 | 1982 | 997 | 511 | 995 | 1500 | 3000 |
| | Nature at 23°C | - | Solid | Liquid | Liquid | Liquid | Liquid | Liquid | Liquid |
| | Melt viscosity at 50°C | mPa·s | Immeasurable | 10340 | 1476 | 333 | 8600 | 5891 | 30112 |
| | Hydroxyl value | mg-KOH/g | 229.5 | 56.6 | 112.5 | 219.4 | 112.8 | 74.8 | 37.4 |
| | Compositional ratio after hydrolysis molar ratio | Aromatic diol | 0.80 | None | None | None | 0.52 | None | None |
| | | Aliphatic diol ① | 0.20 | 0.50 | 0.50 | 0.50 | 0.24 | 0.50 | 0.50 |
| | | Aliphatic diol ② | None | 0.50 | 0.50 | 0.50 | 0.24 | 0.50 | 0.50 |

The obtained polycarbonate group-containing polyols P-1 to P-70 comprised constituent units represented by the following formulas (I) to (III) depending on the aliphatic hydroxy compound (aliphatic diol) of the formula (1) and the aromatic hydroxy compound (aromatic diol) of the formula (2) as starting materials according to the compositional ratios shown in Tables 1 to 6.

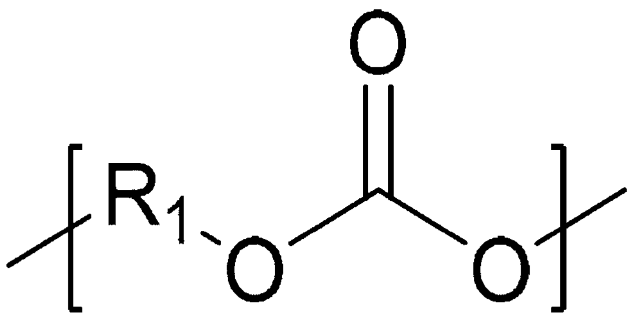

Formula (I)

wherein $R_1$ is an organic group containing a) an organic group having two or more aromatic cyclic structures, and b) an optional aliphatic hydrocarbon group, and has at least one structure wherein the aromatic cyclic structure and the aliphatic hydrocarbon group are linked through an ether bond,

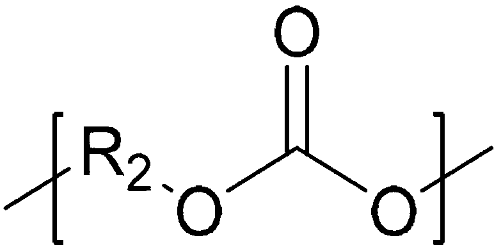

(Formula II)

wherein $R_2$ is an optional aliphatic hydrocarbon group, and

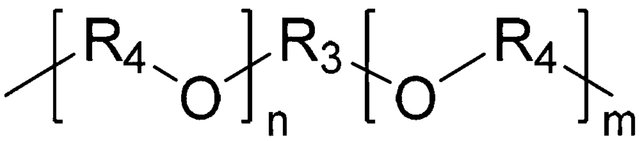

Formula (III)

wherein $R_3$ is an organic group having two or more aromatic cyclic structures, $R_4$ is an optional aliphatic hydrocarbon group, each of n and m is an optional integer including 0, and m + n is 1 or more.

[Application Example 1 Coating film evaluation]

The polycarbonate group-containing polyol P-1 synthesized in Example 1 was used as a base agent, and DURANATE TPA-100 (manufactured by Asahi Kasei Corp.) was used as a curing agent. The base agent and the curing agent were weighed into a plastic container such that the ratio between the mole number of a hydroxy group (OH group) contained in the polycarbonate group-containing polyol P-1 and the mole number of an isocyanate group (NCO group) contained in the curing agent (hereinafter, also referred to as the "NCO/OH ratio") was 1.1. 100 ppm of dibutyltin dilaurate was added as a catalyst based on the total mass of the base agent and the curing agent. Butyl acetate was added as a solvent such that the solid content of the finally obtained coating material composition was 42%. The mixture was stirred until uniform using a stirrer to obtain a coating material composition 1. The obtained coating material composition 1 was used, and applied onto a polycarbonate plate ("Takiron PC-1600" (trade name), 2 mm × 70 mm × 150 mm) such that the dry film thickness was a thickness of 40 μm. The coating material composition 1 applied onto the polycarbonate plate was dried by baking at 60°C for 30 minutes and cured at room temperature for 24 hours to obtain a polyurethane coating film. The obtained polyurethane coating film was evaluated for various physical properties by methods mentioned later. The evaluation results are shown in Table 8.

[Application Examples 2 to 85 and Application Comparative Examples 1 to 14]

Polyurethane coating films were prepared by the same method as in Application Example 1 except that the starting material polyol used in Application Example 1 was changed to the types of starting material polyols and the amounts of the starting material polyols added as described in Tables 8 to 15. The obtained polyurethane coating films were evaluated for various physical properties. The results were as described in Tables 8 to 15.

The synthesis starting materials were directly used as the polyols of Application Comparative Examples 6 to 9.

[Table 8]

| Application Example | | | 1 | 2 | 3 | 4 | 5 | 6 | 7 | 8 | 9 | 10 | 11 | 12 | 13 |
|---|---|---|---|---|---|---|---|---|---|---|---|---|---|---|---|
| Coating film composition 9 | | Polyol | P-1 | P-2 | P-3 | P-4 | P-5 | P-6 | P-7 | P-8 | P-9 | P-10 | P-11 | P-12 | P-13 |
| | | | 10 | 10 | 10 | 10 | 10 | 10 | 10 | 10 | 10 | 10 | 10 | 10 | 10 |
| | | TPA | 8.2 | 8.2 | 8.1 | 8.2 | 4.0 | 3.9 | 2.1 | 2.0 | 2.0 | 3.9 | 3.9 | 4.0 | 3.9 |
| Coating film physical properties | Breaking strength | - | ◎◎ | ◎◎ | ◎◎ | ◎◎ | ◎ | ○ | ○ | ○ | ○ | ○ | ○ | ○ | ○ |
| | Breaking elongation | - | ◎ | ◎ | ◎ | ◎ | ◎ | ◎ | ◎◎ | ◎◎ | ◎ | ◎ | ◎ | ◎ | ◎ |
| | Heat resistance | - | ◎ | ◎ | ◎ | ◎ | ◎ | ◎ | ◎ | ◎ | ◎ | ○ | ◎ | ◎ | ◎ |
| | Tg_DMA | °C | 39 | 40 | 55 | 40 | 21 | 1 | 15 | 2 | -6 | -16 | -2 | -6 | -4 |
| | Rate of swelling in oleic acid | % | 11.8 | 12.3 | 11.5 | 11.6 | 12.5 | 13.9 | 8.7 | 10.9 | 11.8 | 19.3 | 14.1 | 16.2 | 15.5 |
| | Scratch resistance | - | ◎ | ◎ | ◎ | ◎ | ◎ | ○ | ◎ | ○ | ○ | ○ | ○ | ○ | ○ |

[Table 9]

| Application Example | | | 14 | 15 | 16 | 17 | 18 | 19 | 20 | 21 | 22 | 23 | 24 | 25 |
|---|---|---|---|---|---|---|---|---|---|---|---|---|---|---|
| Coating film composition 9 | Polyol | | P-14 | P-15 | P-16 | P-17 | P-18 | P-19 | P-20 | P-21 | P-22 | P-23 | P-24 | P-25 |
| | | | 10 | 10 | 10 | 10 | 10 | 10 | 10 | 10 | 10 | 10 | 10 | 10 |
| | TPA | | 3.9 | 3.9 | 3.8 | 3.9 | 3.7 | 4.2 | 4.1 | 4.1 | 3.8 | 8.1 | 2.0 | 2.6 |
| Coating film physical properties | Breaking strength | - | ○ | ○ | ○ | ○ | ○ | ○ | ○ | ○ | ◎◎ | ◎◎ | ○ | ◎ |
| | Breaking elongation | - | ◎ | ◎ | ◎ | ◎ | ◎ | ◎ | ◎ | ○ | ◎ | ○ | ◎◎ | ◎◎ |
| | Heat resistance | - | ◎ | ◎ | ◎ | ◎ | ○ | ◎ | ◎ | ◎ | ◎ | ◎ | ◎ | ◎ |
| | Tg_DMA | °C | -1 | 1 | 2 | 18 | -7 | 19 | 1 | -3 | 43 | 63 | 17 | 18 |
| | Rate of swelling in oleic acid | % | 13.8 | 13.3 | 12.9 | 19.3 | 17.3 | 13.3 | 15.3 | 16.4 | 12.2 | 9.7 | 11.6 | 10.8 |
| | Scratch resistance | - | ○ | ○ | ○ | ◎ | ○ | ○ | ○ | ○ | ◎ | ◎ | ○ | ◎ |

[Table 10]

| Application Example | | | 26 | 27 | 28 | 29 | 30 | 31 | 32 | 33 | 34 | 35 | 36 | 37 |
|---|---|---|---|---|---|---|---|---|---|---|---|---|---|---|
| Coating film composition 9 | | Polyol | P-26 | P-27 | P-28 | P-29 | P-30 | P-31 | P-32 | P-33 | P-34 | P-35 | P-36 | P-37 |
| | | | 10 | 10 | 10 | 10 | 10 | 10 | 10 | 10 | 10 | 10 | 10 | 10 |
| | | TPA | 8.0 | 8.0 | 8.0 | 8.0 | 8.0 | 4.0 | 5.0 | 4.9 | 4.0 | 7.9 | 5.0 | 8.0 |
| Coating film physical properties | Breaking strength | - | ◎◎ | ◎◎ | ◎◎ | ◎◎ | ◎◎ | ○ | ○ | ◎◎ | ◎ | ◎◎ | ◎◎ | ◎◎ |
| | Breaking elongation | - | ◎ | ◎ | ◎ | ◎ | ◎ | ◎ | ◎ | ◎ | ◎ | ◎ | ◎ | ○ |
| | Heat resistance | - | ◎ | ◎ | ◎ | ◎ | ◎ | ◎ | ◎ | ◎ | ◎ | ◎ | ◎ | ◎ |
| | Tg_DMA | °C | 39 | 39 | 53 | 50 | 59 | -3 | 5 | 21 | 12 | 31 | 36 | 40 |
| | Rate of swelling in oleic acid | % | 11.2 | 11.6 | 11.8 | 12.1 | 10.0 | 12.7 | 12.5 | 11.2 | 12.7 | 12.5 | 12.7 | 11.2 |
| | Scratch resistance | - | ◎ | ◎ | ◎ | ◎ | ◎ | ◎ | ○ | ◎ | ◎ | ○ | ◎ | ◎ |

[Table 11]

| Application Example | | | 38 | 39 | 40 | 41 | 42 | 43 | 44 | 45 | 46 | 47 | 48 | 49 | 50 |
|---|---|---|---|---|---|---|---|---|---|---|---|---|---|---|---|
| Coating film composition 9 | Polyol | | P-38 | P-39 | P-40 | P-41 | P-42 | P-43 | P-44 | P-45 | P-46 | P-47 | P-48 | P-49 | P-50 |
| | | | 10 | 10 | 10 | 10 | 10 | 10 | 10 | 10 | 10 | 10 | 10 | 10 | 10 |
| | TPA | | 4.0 | 4.0 | 8.0 | 8.1 | 8.1 | 8.1 | 4.0 | 4.0 | 2.0 | 2.0 | 8.0 | 8.1 | 3.9 |
| Coating film physical properties | Breaking strength | - | ◎ | ◎ | ◎◎ | ◎ | ◎ | ◎ | ○ | ◎ | ○ | ○ | ◎ | ◎ | ○ |
| | Breaking elongation | - | ◎ | ◎ | ◎ | ○ | ○ | ◎ | ◎ | ◎◎ | ◎ | ◎◎ | ○ | ◎ | ◎ |
| | Heat resistance | - | ◎ | ◎ | ◎ | ◎ | ◎ | ◎ | ◎ | ◎ | ◎ | ◎ | ◎ | ◎ | ◎ |
| | Tg_DMA | °C | 26 | 22 | 32 | 24 | 21 | 38 | -4 | 18 | -8 | 12 | 16 | 34 | -7 |
| | Rate of swelling in oleic acid | % | 11.9 | 15.5 | 13.1 | 13.8 | 14.2 | 12.5 | 14.4 | 13.1 | 10.8 | 9.5 | 14.8 | 13.1 | 14.7 |
| | Scratch resistance | - | ◎ | ○ | ◎ | ○ | ○ | ◎ | ○ | ◎ | ○ | ◎ | ○ | ◎ | ○ |

[Table 12]

| Application Example | | | 51 | 52 | 53 | 54 | 55 | 56 | 57 | 58 | 59 | 60 | 61 | 62 |
|---|---|---|---|---|---|---|---|---|---|---|---|---|---|---|
| Coating film composition 9 | | Polyol | P-51 | P-52 | P-53 | P-54 | P-55 | P-56 | P-57 | P-58 | P-59 | P-60 | P-61 | P-62 |
| | | | 10 | 10 | 10 | 10 | 10 | 10 | 10 | 10 | 10 | 10 | 10 | 10 |
| | | TPA | 4.0 | 2.0 | 2.0 | 7.9 | 8.2 | 4.0 | 4.1 | 2.0 | 2.0 | 7.8 | 7.9 | 4.0 |
| Coating film physical properties | Breaking strength | - | ◎ | ○ | ○ | ○ | ◎ | ○ | ◎ | ○ | ○ | ○ | ◎ | ◎ |
| | Breaking elongation | - | ◎◎ | ◎ | ◎◎ | ○ | ◎ | ◎ | ◎◎ | ◎ | ◎◎ | ○ | ◎ | ◎◎ |
| | Heat resistance | - | ◎ | ◎ | ◎ | ◎ | ◎ | ◎ | ◎ | ◎ | ◎ | ◎ | ◎ | ◎ |
| | Tg_DMA | °C | 15 | -11 | 8 | 6 | 25 | -11 | 9 | -20 | -2 | 12 | 30 | 13 |
| | Rate of swelling in oleic acid | % | 13.5 | 11.3 | 10.4 | 16.4 | 14.3 | 16.5 | 14.6 | 13.6 | 12.4 | 15.6 | 13.8 | 14.1 |
| | Scratch resistance | - | ◎ | ○ | ◎ | ○ | ○ | ○ | ◎ | ○ | ◎ | ○ | ◎ | ◎ |

[Table 13]

| Application Example | | | 63 | 64 | 65 | 66 | 67 | 68 | 69 | 70 |
|---|---|---|---|---|---|---|---|---|---|---|
| Coating film composition 9 | | Polyol | P-63 | P-64 | P-65 | P-66 | P-67 | P-68 | P-69 | P-70 |
| | | | 10 | 10 | 10 | 10 | 10 | 10 | 10 | 10 |
| | | TPA | 2.0 | 2.0 | 2.6 | 1.4 | 1.3 | 1.3 | 2.0 | 2.0 |
| Coating film physical properties | Breaking strength | - | ○ | ○ | ◎ | ○ | ○ | ○ | ○ | ○ |
| | Breaking elongation | - | ◎ | ◎◎ | ◎◎ | ◎◎ | ◎◎ | ◎◎ | ◎◎ | ◎◎ |
| | Heat resistance | - | ◎ | ◎ | ◎ | ◎ | ◎ | ◎ | ◎ | ◎ |
| | Tg_DMA | °C | -15 | 4 | 18 | -5 | 12 | 5 | 18 | 13 |
| | Rate of swelling in oleic acid | % | 12.0 | 11.2 | 10.1 | 9.5 | 9.1 | 9.7 | 8.4 | 8.9 |
| | Scratch resistance | - | ○ | ◎ | ◎ | ○ | ○ | ○ | ◎ | ◎ |

[Table 14]

| Application Example | | | 71 | 72 | 73 | 74 | 75 | 76 | 77 | 78 | 79 | 80 | 81 | 82 | 83 | 84 | 85 |
|---|---|---|---|---|---|---|---|---|---|---|---|---|---|---|---|---|---|
| Adhesive composition 9 | | Polyol | P-1 | P-1 | P-1 | P-5 | P-5 | P-5 | P-7 | P-7 | P-7 | P-65 | P-65 | P-65 | P-66 | P-66 | P-66 |
| | | | 9 | 8 | 5 | 9 | 8 | 5 | 9 | 8 | 5 | 9 | 8 | 5 | 9 | 8 | 5 |
| | | B2 | | | | | | | 1.0 | 2.0 | 5.0 | | | | | | |
| | | B3 | | | | 1.0 | 2.0 | 5.0 | | | | | | | | | |
| | | B4 | 1.0 | 2.0 | 5.0 | | | | | | | | | | | | |
| | | B6 | | | | | | | | | | 1.0 | 2.0 | 5.0 | | | |
| | | B7 | | | | | | | | | | | | | 1.0 | 2.0 | 5.0 |
| | | TPA | 8.2 | 8.2 | 8.1 | 4.0 | 4.0 | 4.0 | 2.1 | 2.0 | 2.0 | 2.6 | 2.6 | 2.7 | 1.4 | **1.4** | **1.4** |
| Coating film physical properties | Breaking strength | - | ◎◎ | ◎ | ○ | ◎ | ○ | ○ | ○ | ○ | ○ | ◎ | ○ | ○ | ○ | ○ | ○ |
| | Breaking elongation | - | ◎ | ◎ | @ | @ | @ | ◎ | ◎◎ | ◎ | ◎ | ◎◎ | ◎ | ◎ | ◎◎ | ◎◎ | ◎ |
| | Heat resistance | - | ◎ | ◎ | ◎ | ◎ | ◎ | ◎ | ◎ | ◎ | ◎ | ◎ | ◎ | ◎ | ◎ | ◎ | ◎ |
| | Tg_DMA | °C | 36 | 34 | 22 | 15 | 12 | 2 | 17 | 14 | 6 | 16 | 13 | 4 | -8 | -12 | -17 |
| | Rate of swelling in oleic acid | % | 11.8 | 12.1 | 12.7 | 8.7 | 9.1 | 10.0 | 12.8 | 13.2 | 14.1 | 10.1 | 10.5 | 11.9 | 9.9 | 10.5 | 11.4 |
| | Scratch resistance | - | ◎ | ◎ | ○ | ◎ | ◎ | ○ | ◎ | ◎ | ○ | ◎ | ◎ | ○ | ◎ | ◎ | ○ |

[Table 15]

| Application Comparative Example | | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|
| Coating film composition 9 | | Polyol | B-1 | B-2 | B-3 | B-4 | B-5 | BPE-20 | BPE-100 | BPEF | BOPPEF | B-2/BPE-100 | B-3/BPEF | B-4/BPE-20 | B-6 | B-7 |
| | | | 10 | 10 | 10 | 10 | 10 | 10 | 10 | 10 | 10 | 5/5 | 5/5 | 5/5 | 10 | 10 |
| | | TPA | 8.2 | 2.0 | 4.0 | 7.9 | 4.0 | 12.2 | 6.1 | 9.2 | 6.8 | 4.0 | 6.6 | 10.1 | 2.7 | 1.3 |
| Coating film physical properties | Breaking strength | - | ○ | × | × | △ | ○ | ○ | △ | ○ | ○ | × | ○ | ○ | × | × |
| | Breaking elongation | - | × | ◎ | ○ | △ | △ | × | △ | × | × | △ | × | × | ○ | ◎ |
| | Heat resistance | - | ◎ | ◎ | ◎ | ◎ | ○ | ○ | × | ○ | ○ | △ | ○ | ○ | ◎ | ◎ |
| | Tg_DMA | °C | 86 | -23 | -12 | 20 | -4 | 45 | 38 | 80 | 93 | -12 | 35 | 28 | -18 | -30 |
| | Rate of swelling in oleic acid | % | 7.6 | 14.3 | 16.4 | 19.0 | 14.9 | 10.7 | 18.5 | 7.2 | 7.0 | 16.9 | 13.1 | 16.5 | 15.5 | 12.3 |
| | Scratch resistance | - | ◎ | × | × | × | △ | ○ | ○ | ○ | ○ | × | △ | △ | × | × |

<Tensile test>

A test specimen of each polyurethane coating film in the form of a strip of having a width of 10 mm, a length of 100 mm, and a thickness of approximately 0.5 mm was subjected to a tensile test at a temperature of 23°C (relative humidity: 55%) at a distance between chucks of 20 mm and a pulling rate of 100 mm/min using a tensile tester (manufactured by Orientec Co., Ltd., product name "Tensilon, model RTE-1210") in accordance with JIS K6301 (2010) to measure strength at break and elongation at break.

(Evaluation criteria)

Breaking strength

◎◎: The strength at break was 50 MPa or more.

◎: The strength at break was 40 MPa or more and less than 50 MPa.

O: The strength at break was 10 MPa or more and less than 40 MPa.

△: The strength at break was 5 MPa or more and less than 10 MPa.

×: The strength at break was less than 5 MPa or not evaluable.

Breaking elongation

◎◎: The elongation at break was 200% or more.

◎: The elongation at break was 150% or more and less than 200%.

O: The elongation at break was 100% or more and less than 150%.

△: The elongation at break was 50% or more and less than 100%.

×: **The elongation** at break was less than 50% or not evaluable.

<Evaluation of heat resistance>

A sample of each polyurethane coating film in the form of a strip of having a width of 10 mm, a length of 100 mm, and a thickness of approximately 50 μm was heated at a temperature of 120°C for 1000 hours in a gear oven. The breaking strength of the sample thus heated was measured in the same manner as in the preceding section <Tensile test at room temperature>, and its retention rate (%) was determined. Heat resistance was evaluated on the basis of the following evaluation criteria from the obtained retention rate.

(Evaluation criteria)

◎: The retention rate was 98% or more.

O: The retention rate was 93% or more and less than 98%.

△: The retention rate was 80% or more and less than 93%.

×: The retention rate was less than 80% or not evaluable.

<Measurement of glass transition temperature (Tg) of coating film>

A test specimen having a width of 10 mm, a length of 40 mm, and a thickness of 0.4 mm was cut out of each polyurethane coating film. The test specimen was set to at a distance between chucks of 20 mm using a viscoelasticity measurement apparatus (manufactured by Hitachi High-Tech Science Corp., [TA7000 series, DMA7100]). Viscoelasticity was measured while the temperature was increased **from** -100°C to 100°C at 5°C/min. The peak of tanδ was read to determine a glass transition temperature (Tg_DMA).

<Evaluation of oleic acid resistance>

A 3 cm × 3 cm test specimen was cut out of each polyurethane coating film. The weight of the test specimen was measured with a precision balance. Then, the test specimen was added to a 250 mL glass bottle containing 50 mL oleic acid as a test solvent, and the glass bottle was left standing for 16 hours in a thermostat bath of 80°C in a nitrogen atmosphere. The front and back sides of the test specimen thus tested were lightly wiped with a paper wiper. Then, the weight was measured with a precision balance, and the rate of change in weight (rate of increase: rate of swelling in oleic acid) from the weight before the test was calculated. A rate of change in weight closer to 0% means more favorable oleic acid resistance.

<Scratch resistance>

The obtained coating film was used, and scratched by travelling a brass brush (standard type, 3 rows, manufactured by AS ONE Corp.) installed in RUBBING TESTER (manufactured by Taihei Rika Kogyo Co., Ltd.) back and force 20 times under 745 g load on the coating film. The gloss (X1) of the coating film immediately after scratching was measured using a variable angle glossmeter (UGV-6P, manufactured by Suga Test Instruments Co., Ltd.) with an acceptance angle set to 60 degrees and an incident angle set to 60 degrees. An initial gloss at the same location before the scratch resistance test was defined as X0. A gloss retention rate was calculated according to the following expression (ii):

$$\text{Gloss retention rate (\%)} = (X1 / X0) \times 100 \ldots \text{(ii)}$$

Subsequently, from the obtained gloss retention rate, scratch resistance was evaluated on the basis of the evaluation criteria given below. A coating film having a haze value of 1.0 or more was regarded as being not evaluable because reproducible evaluation is difficult. The haze value was measured with a haze meter (manufactured by Suga Test Instruments Co., Ltd., HMG-2DP).

(Evaluation Criteria)

◎: The gloss retention rate was 95% or more.

O: The gloss retention rate was 85% or more and less than 95%.

△: The gloss retention rate was 75% or more and less than 85%.

×: The gloss retention rate was less than 75% or not evaluable.

[Application Example 86 Preparation of adhesive composition]

The polycarbonate group-containing polyol P-1 synthesized in Example 1 was used as a base agent, and DURANATE TPA-100 (manufactured by Asahi Kasei Corp.) was used as a curing agent. The base agent and the curing agent were weighed into a plastic container for a non-bubbling kneader such that the ratio between the mole number of a hydroxy group (OH group) contained in the polycarbonate group-containing polyol P-1 and the mole number of an isocyanate group (NCO group) contained in the curing agent (hereinafter, also referred to as the "NCO/OH ratio") was 1.1. 100 ppm of dibutyltin dilaurate was added as a catalyst based on the total mass of the base agent and the curing agent. The mixture was stirred until uniform using a non-bubbling kneader to obtain an adhesive composition 1. The obtained adhesive composition 1 was evaluated for shear bond strength by a method mentioned later. The evaluation results are shown in Table 16.

[Application Examples 87 to 155 and Application Comparative Examples 15 to 28]

Adhesive compositions were prepared by the same method as in Application Example 86 except that the starting material polyol used in Application Example 86 was changed to the types of starting material polyols and the amounts of the starting material polyols added as described in Tables 16 to 22. The obtained adhesive compositions were evaluated for various physical properties. The results were as described in Tables 16 to 22.

[Shear bond strength (adhesiveness)]

Each adhesive composition was applied at a width of 25 mm, a length of 10 mm, and a thickness of 0.1 mm onto a stainless base material (length: 100 mm, width: 25 mm, thickness: 2 mm) and laminated with a carbon fiber-reinforced plastic substrate (length: 100 mm, width: 25 mm, thickness: 2 mm). The resultant in a state pressure-bonded so as to retain a thickness of 0.1 mm was cured at 80°C for 1 day to obtain a test specimen. The shear adhesive strength (shear bond strength) of the obtained test specimen was measured at a pulling rate of 1 mm/min using a tensile tester under conditions involving a temperature of 23°C and a relative humidity of 55%, and assessed according to the following evaluation criteria.

(Evaluation criteria)

◎: The shear bond strength was 10 MPa or more (very favorable).

○: The shear bond strength was 7 MPa or more and less than 10 MPa (favorable).

△: The shear bond strength was 5 MPa or more and less than 7 MPa (usable).

×: The shear bond strength was less than 5 MPa (unusable).

[Bond strength retention rate (adhesiveness) after moist heat resistance test]

A test specimen obtained by the same method as in the measurement of the shear adhesive strength (shear bond strength) was heated under conditions involving a temperature of 85°C and a humidity of 85% for 10 days in a thermo-hygrostat manufactured by ESPEC Corp. under product name of "PL-1J". The shear adhesive strength (shear bond strength) of the obtained test specimen before and after heating was measured at a pulling rate of 1 mm/min using a tensile tester under conditions involving a temperature of 23°C and a relative humidity of 55%. A shear adhesive strength retention rate (bond strength retention rate) (%) was determined according to the following expression (a), and assessed according to the following evaluation criteria.

Shear adhesive strength retention rate (%) = Shear adhesive strength after heating / Shear adhesive strength before heating × 100 (a) (a)

(Evaluation criteria)

◎◎: The shear adhesive strength retention rate was 95% or more.

◎: The shear adhesive strength retention rate was 90% or more and less than 95%.

O: The shear adhesive strength retention rate was 80% or more and less than 90%.

△: The shear adhesive strength retention rate was 50% or more and less than 80%.

×: The shear adhesive strength retention rate was less than 50% or not evaluable.

[Table 16]

| Application Example | | 86 | 87 | 88 | 89 | 90 | 91 | 92 | 93 | 94 | 95 | 96 | 97 | 98 |
|---|---|---|---|---|---|---|---|---|---|---|---|---|---|---|
| Coating film composition 9 | Polyol | P-1 | P-2 | P-3 | P-4 | P-5 | P-6 | P-7 | P-8 | P-9 | P-10 | P-11 | P-12 | P-13 |
| | | 10 | 10 | 10 | 10 | 10 | 10 | 10 | 10 | 10 | 10 | 10 | 10 | 10 |
| | TPA | 8.2 | 8.2 | 8.1 | 8.2 | 4.0 | 3.9 | 2.1 | 2.0 | 2.0 | 3.9 | 3.9 | 4.0 | 3.9 |
| Shear bond strength | - | ◎ | ◎ | ○ | ◎ | ○ | ○ | ○ | ○ | ○ | ◎ | ○ | ◎ | ◎ |
| Bond strength retention rate after moist heat resistance test | - | ◎◎ | ○ | ○ | ○ | ◎◎ | ◎ | ◎◎ | ◎◎ | ◎ | ◎ | ◎ | △ | △ |

[Table 17]

| Application Example | | 99 | 100 | 101 | 102 | 103 | 104 | 105 | 106 | 107 | 108 | 109 | 110 |
|---|---|---|---|---|---|---|---|---|---|---|---|---|---|
| Coating film composition 9 | Polyol | P-14 | P-15 | P-16 | P-17 | P-18 | P-19 | P-20 | P-21 | P-22 | P-23 | P-24 | P-25 |
| | | 10 | 10 | 10 | 10 | 10 | 10 | 10 | 10 | 10 | 10 | 10 | 10 |
| | TPA | 3.9 | 3.9 | 3.8 | 3.9 | 3.7 | 4.2 | 4.1 | 4.1 | 3.8 | 8.1 | 2.0 | 2.6 |
| Shear bond strength | - | ◎ | ◎ | ◎ | ○ | ○ | ○ | ○ | ○ | ○ | ○ | △ | ○ |
| Bond strength retention rate after moist heat resistance test | - | △ | △ | △ | ◎◎ | ◎ | ◎◎ | ◎ | ○ | ◎◎ | ◎ | △ | ○ |

[Table 18]

| Application Example | | 111 | 112 | 113 | 114 | 115 | 116 | 117 | 118 | 119 | 120 | 121 | 122 |
|---|---|---|---|---|---|---|---|---|---|---|---|---|---|
| Coating film composition 9 | Polyol | P-26 | P-27 | P-28 | P-29 | P-30 | P-31 | P-32 | P-33 | P-34 | P-35 | P-36 | P-37 |
| | | 10 | 10 | 10 | 10 | 10 | 10 | 10 | 10 | 10 | 10 | 10 | 10 |
| | TPA | 8.0 | 8.0 | 8.0 | 8.0 | 8.0 | 4.0 | 5.0 | 4.9 | 4.0 | 7.9 | 5.0 | 8.0 |
| Shear bond strength | - | ◎ | ◎ | ◎ | ◎ | ◎ | ○ | ◎ | ◎ | ◎ | ◎ | ○ | ◎ |
| Bond strength retention rate after moist heat resistance test | - | ◎◎ | ◎◎ | ◎◎ | ◎◎ | ◎ | ◎ | △ | ○ | △ | ○ | ○ | ○ |

[Table 19]

| Application Example | | 123 | 124 | 125 | 126 | 127 | 128 | 129 | 130 | 131 | 132 | 133 | 134 | 135 |
|---|---|---|---|---|---|---|---|---|---|---|---|---|---|---|
| Coating film composition 9 | Polyol | P-38 | P-39 | P-40 | P-41 | P-42 | P-43 | P-44 | P-45 | P-46 | P-47 | P-48 | P-49 | P-50 |
| | | 10 | 10 | 10 | 10 | 10 | 10 | 10 | 10 | 10 | 10 | 10 | 10 | 10 |
| | TPA | 4.0 | 4.0 | 8.0 | 8.1 | 8.1 | 8.1 | 4.0 | 4.0 | 2.0 | 2.0 | 8.0 | 8.1 | 3.9 |
| Shear bond strength | - | ◎ | ◎ | ◎ | ◎ | ◎ | ◎ | ○ | ○ | ○ | ○ | ○ | ○ | ○ |
| Bond strength retention rate after moist heat resistance test | - | ○ | ○ | ○ | ○ | ○ | ○ | ○ | ○ | ○ | ○ | ○ | ○ | ○ |

[Table 20]

| Application Example | | 136 | 137 | 138 | 139 | 140 | 141 | 142 | 143 | 144 | 145 | 146 | 147 |
|---|---|---|---|---|---|---|---|---|---|---|---|---|---|
| Coating film composition 9 | Polyol | P-51 | P-52 | P-53 | P-54 | P-55 | P-56 | P-57 | P-58 | P-59 | P-60 | P-61 | P-62 |
| | | 10 | 10 | 10 | 10 | 10 | 10 | 10 | 10 | 10 | 10 | 10 | 10 |
| | TPA | 4.0 | 2.0 | 2.0 | 7.9 | 8.2 | 4.0 | 4.1 | 2.0 | 2.0 | 7.8 | 7.9 | 4.0 |
| Shear bond strength | - | ○ | ○ | ○ | ○ | ○ | ○ | ○ | ○ | ○ | ○ | ○ | ○ |
| Bond strength retention rate after moist heat resistance test | - | ○ | ○ | ○ | ○ | ○ | ○ | ○ | ○ | ○ | ○ | ○ | ○ |

[Table 21]

| Application Example | | 148 | 149 | 150 | 151 | 152 | 153 | 154 | 155 |
|---|---|---|---|---|---|---|---|---|---|
| Coating film composition g | Polyol | P-63 | P-64 | P-65 | P-66 | P-67 | P-68 | P-69 | P-70 |
| | | 10 | 10 | 10 | 10 | 10 | 10 | 10 | 10 |
| | TPA | 2.0 | 2.0 | 2.6 | 1.4 | 1.3 | 1.3 | 2.0 | 2.0 |
| Shear bond strength | - | ○ | ○ | ○ | ○ | ○ | ○ | ○ | ○ |
| Bond strength retention rate after moist heat resistance test | - | ○ | ○ | ◎◎ | ◎◎ | ◎◎ | ◎◎ | ◎◎ | ◎◎ |

[Table 22]

| Application Comparative Example | | 15 | 16 | 17 | 18 | 19 | 20 | 21 | 22 | 23 | 24 | 25 | 26 | 27 | 28 |
|---|---|---|---|---|---|---|---|---|---|---|---|---|---|---|---|
| Coating film composition g | Polyol | B-1 | B-2 | B-3 | B-4 | B-5 | BPE-20 | BPE-100 | BPEF | BOPPEF | B-2/BPE-100 | B-3/BPEF | B-4/BPE-20 | B-6 | B-7 |
| | | 10 | 10 | 10 | 10 | 10 | 10 | 10 | 10 | 10 | 5/5 | 5/5 | 5/5 | 10 | 10 |
| | TPA | 8.2 | 2.0 | 4.0 | 7.9 | 4.0 | 12.2 | 6.1 | 9.2 | 6.8 | 4.0 | 6.6 | 10.1 | 2.7 | 1.3 |
| Shear bond strength | - | × | × | × | △ | △ | ○ | ○ | ○ | ○ | ○ | ○ | ○ | × | × |
| Bond strength retention rate after moist heat resistance test | - | △ | ○ | ○ | ○ | △ | × | △ | × | × | △ | × | △ | ○ | ○ |

[Application Example 156] Synthesis of thermoplastic urethane resin

In a 500 ml separable flask in which a thermocouple and a condenser were installed, 300 g of the carbonate group-containing polyol P-1 synthesized in Example 1, and 2.33 g (50 ppm based on the total mass of 4,4'-diphenylmethane diisocyanate (hereinafter, also referred to as "MDI" and the carbonate group-containing polyol) of a 1% solution of dibutyltin dilaurate in toluene (hereinafter, also referred to as a "1% DBTL solution") were placed, and warmed in an oil bath of 120°C. While the solution in the flask was stirred at 100 rpm in a nitrogen atmosphere in the flask, 165.2 g of MDI (1.1 times [mol] based on OH [mol] of the carbonate group-containing polyol) was added dropwise thereto. The mixture was reacted for approximately 8 hours to obtain thermoplastic urethane resin.

(Preparation of thermoplastic urethane resin sheet)

Two polyethylene terephthalate (PET) sheets subjected to release treatment were provided. Next, the thermoplastic urethane resin obtained as described above was melted by heating at 110°C in an oven and applied onto one of the PET sheets subjected to release treatment. Then, the other PET sheet subjected to release treatment was laminated onto the applied thermoplastic urethane resin to obtain a laminate. The obtained laminate was placed between press plates of a heat press while a spacer having a thickness of 1 mm was placed on the outer side of the laminate. The laminate was heat-pressed at 100°C under a pressure of 3 MPa for 120 seconds so that the thermoplastic urethane resin was shaped into a sheet, which was then allowed to cool until the temperature became 30°C. Then, the two PET sheets subjected to release treatment were removed from the laminate to obtain a thermoplastic urethane resin shaped into a sheet. This thermoplastic urethane resin shaped into a sheet was cured in an atmosphere having a temperature of 20°C and a relative humidity of 50% for 1 week to obtain a thermoplastic urethane resin sheet having a thickness of 1 mm.

(Preparation of peel strength measurement sample)

Two polyethylene terephthalate (PET) sheets were used, and the thermoplastic urethane resin obtained as described above was melted by heating at 110°C in an oven and applied onto one of the PET sheets. The other PET sheet was laminated onto the applied thermoplastic urethane resin to obtain a laminate. The obtained laminate was placed between press plates of a heat press while a spacer having a thickness of 1 mm was placed on the outer side of the laminate. The laminate was heat-pressed at 100°C under a pressure of 3 MPa for 120 seconds so that the thermoplastic urethane resin laminate was formed with the PET films, which was then allowed to cool until the temperature became 30°C to obtain a laminate sample. The obtained laminate sample was cut into a size of 200 mm $\times$ 25 mm and cured in an atmosphere having a temperature of 20°C and a relative humidity of 50% for 1 week to obtain a peel strength measurement sample.

The obtained thermoplastic urethane resin sheet and the peel strength measurement sample were evaluated for various physical properties by methods mentioned later. The evaluation results are shown in Table 23.

[Application Examples 157 to 232]

Thermoplastic urethane resins were obtained through reaction using the same conditions and method as in Application Example 156 except that the type of each starting material was changed as described in Tables 23 to 26. Thermoplastic urethane resin sheets and bond strength measurement samples were obtained by the same method as in Application Example 156 using the obtained thermoplastic urethane resins, and evaluated for various physical properties. The evaluation results are shown in Tables 23 to 26.

[Application Comparative Examples 29 to 42]

Thermoplastic urethane resins were obtained through reaction using the same conditions and method as in Application Example 156 except that the type of each starting material was changed as described in Table 26. Thermoplastic urethane resin sheets and bond strength measurement samples were obtained by the same method as in Application Example 156 using the obtained thermoplastic urethane resins, and evaluated for various physical properties. The evaluation results are shown in Table 26.

Abbreviations are as described below.

MDI: 4,4'-diphenylmethane diisocyanate

Hydrogenated MDI: 4,4'-methylene biscyclohexyl diisocyanate

TDI: toluene diisocyanate

IPDI: isophorone diisocyanate

HDI: hexamethylene diisocyanate

DBTL: dibutyltin dilaurate

[Table 23]

| Application Example | | | 156 | 157 | 158 | 159 | 160 | 162 | 163 | 164 | 165 | 166 | 167 | 168 | 169 | 171 | 172 | 173 | 174 | 175 |
|---|---|---|---|---|---|---|---|---|---|---|---|---|---|---|---|---|---|---|---|---|
| Coating film composition g | | Polyol | P-1 | P-1 | P-1 | P-1 | P-1 | P-4 | P-5 | P-6 | P-7 | P-7 | P-7 | P-7 | P-7 | P-9 | P-10 | P-11 | P-12 | P-13 |
| | | | 300 | 300 | 300 | 300 | 300 | 300 | 300 | 300 | 300 | 300 | 300 | 300 | 300 | 300 | 300 | 300 | | |
| | | MDI | 165.2 | | | | | 165.2 | 82.6 | 82.6 | 41.3 | | | | | 41.3 | 82.6 | 82.6 | | |
| | | Hydrogenated MDI | | 173.2 | | | | | | | | 43.3 | | | | | | | | |
| | | TDI | | | 115.0 | | | | | | | | 28.7 | | | | | | | |
| | | IPDI | | | | 146.7 | | | | | | | | 36.7 | | | | | | |
| | | HDI | | | | | 111 | | | | | | | | 27.8 | | | | | |
| | | 1% DBTL solution | 2.33 | 2.37 | 2.07 | 2.23 | 2.06 | 2.33 | 1.91 | 1.91 | 1.71 | 1.72 | 1.64 | 1.68 | 1.64 | 1.71 | 1.91 | 1.91 | | |
| Coating film physical properties | Breaking strength | - | ◎◎ | ◎◎ | ◎◎ | ◎◎ | ◎ | ◎◎ | ◎ | ○ | ○ | ○ | ◎ | ○ | ○ | ○ | ○ | ○ | ○ | ○ |
| | Breaking elongation | - | ○ | ○ | ○ | ○ | ◎ | ○ | ◎ | ○ | ◎◎ | ◎◎ | ◎◎ | ◎◎ | ◎◎ | ◎ | ○ | ◎ | ◎ | ◎ |
| | Heat resistance | - | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ |
| | Tg_DMA | °C | 75 | 70 | 80 | 69 | 45 | 72 | 40 | 20 | 19 | 15 | 23 | 13 | -2 | -12 | 12 | 16 | | |
| | Rate of swelling in oleic acid | % | 1.5 | 1.8 | 1.3 | 2.0 | 2.3 | 1.9 | 2.2 | 2.6 | 2.4 | 2.9 | 2.1 | 3.1 | 3.5 | 3.6 | 3.2 | 3.0 | | |
| | Scratch resistance | - | ◎ | ◎ | ◎ | ◎ | ◎ | ○ | ◎ | ○ | ◎ | ◎ | ◎ | ◎ | ◎ | ○ | ○ | ○ | ○ | ○ |
| Peel strength | | - | ◎◎ | ◎◎ | ◎ | ◎◎ | ◎ | ◎ | ◎◎ | ◎ | ◎ | ◎ | ◎ | ◎ | ◎ | ◎ | ◎ | ◎ | ◎ | ◎ |
| Peel strength retention rate after moist heat resistance test | | - | ◎◎ | ◎◎ | ◎ | ◎◎ | ◎◎ | ○ | ◎◎ | ◎ | ◎◎ | ◎ | ◎◎ | ◎◎ | ◎ | ◎ | ◎ | ◎ | ○ | ○ |

[Table 24]

| Application Example | | 176 | 177 | 178 | 181 | 182 | 183 | 184 | 185 | 186 | 187 |
|---|---|---|---|---|---|---|---|---|---|---|---|
| Coating film composition g | Polyol | P-14 | P-15 | P-16 | P-19 | P-20 | P-21 | P-22 | P-23 | P-24 | P-25 |
| | | 300 | 300 | 300 | 300 | 300 | 300 | 300 | 300 | 300 | 300 |
| | MDI | 82.6 | 82.6 | 82.6 | 82.6 | 82.6 | 82.6 | 82.6 | 165.2 | 41.3 | 55.1 |
| | Hydrogenated MDI | | | | | | | | | | |
| | TDI | | | | | | | | | | |
| | IPDI | | | | | | | | | | |
| | HDI | | | | | | | | | | |
| | 1% DBTL solution | 1.91 | 1.91 | 1.91 | 1.91 | 1.91 | 1.91 | 1.91 | 2.33 | 1.71 | 1.78 |

(continued)

| Application Example | | | 176 | 177 | 178 | 181 | 182 | 183 | 184 | 185 | 186 | 187 |
|---|---|---|---|---|---|---|---|---|---|---|---|---|
| Coating film physical properties | Breaking strength | - | ○ | ○ | ○ | ◎ | ○ | ○ | ◎ | ◎◎ | ○ | ◎ |
| | Breaking elongation | - | ○ | ○ | ○ | ◎ | ○ | ○ | ◎ | ○ | ◎◎ | ◎◎ |
| | Heat resistance | - | ◎ | ◎ | ◎ | ◎ | ◎ | ◎ | ◎ | ◎ | ◎ | ◎ |
| | Tg_DMA | °C | 19 | 22 | 24 | 36 | 17 | 8 | 48 | 82 | 20 | 26 |
| | Rate of swelling in oleic acid | % | 3.1 | 2.9 | 2.8 | 2.4 | 3.3 | 3.9 | 2.0 | 1.0 | 2.5 | 1.7 |
| | Scratch resistance | - | ○ | ○ | ○ | ◎ | ○ | ○ | ◎ | ◎ | ○ | ◎ |
| Peel strength | | - | ◎ | ◎ | ◎ | ◎◎ | ◎ | ○ | ◎ | ○ | △ | ○ |
| Peel strength retention rate after moist heat resistance test | | - | ○ | ○ | ○ | ◎◎ | ◎◎ | ◎◎ | ◎◎ | ○ | ○ | ○ |

[Table 25]

| Application Example | | | 188 | 189 | 194 | 195 | 196 | 197 | 198 | 199 | 200 | 201 | 202 | 203 | 205 | 209 | 217 | 221 | 227 | 228 | 229 | 230 | 231 | 232 |
|---|---|---|---|---|---|---|---|---|---|---|---|---|---|---|---|---|---|---|---|---|---|---|---|---|
| Coating film composition g | Polyol | | P-14 | P-15 | P-20 | P-21 | P-21 | P-21 | P-24 | P-25 | P-25 | P-25 | P-25 | P-25 | P-25 | P-25 | P-25 | P-25 | P-25 | P-25 | P-25 | P-25 | P-25 | P-25 |
| | | | 300 | 300 | 300 | 300 | 300 | 300 | 300 | 300 | 300 | 300 | 300 | 300 | 300 | 300 | 300 | 300 | 300 | 300 | 300 | 300 | 300 | 300 |
| | MDI | | 165.2 | 165.2 | 103.2 | 103.2 | 82.6 | 165.2 | 103.2 | 165.2 | 82.6 | 82.6 | 165.2 | 165.2 | 165.2 | 41.3 | 165.2 | 41.3 | 55.1 | 27.5 | 27.5 | 27.5 | 41.3 | 41.3 |
| | Hydrogenated MDI | | | | | | | | | | | | | | | | | | | | | | | |
| | TDI | | | | | | | | | | | | | | | | | | | | | | | |
| | IPDI | | | | | | | | | | | | | | | | | | | | | | | |
| | HDI | | | | | | | | | | | | | | | | | | | | | | | |
| | 1% DBTL solution | | 2.33 | 2.33 | 2.02 | 2.02 | 1.91 | 2.33 | 2.02 | 2.33 | 1.91 | 1.91 | 2.33 | 2.33 | 2.33 | 1.71 | 2.33 | 1.71 | 1.78 | 1.64 | 1.64 | 1.64 | 1.71 | 1.71 |
| Coating film physical properties | Breaking strength | - | ◎◎ | ◎◎ | ◎ | ◎◎ | ◎ | ◎◎ | ◎◎ | ◎◎ | ◎ | ◎ | ◎◎ | ◎ | ◎◎ | ○ | ◎◎ | ○ | ◎ | ○ | ○ | ○ | ○ | ○ |
| | Breaking elongation | - | ○ | ○ | ○ | ◎ | ◎ | ○ | ○ | ○ | ◎ | ◎ | ○ | ○ | ○ | ◎◎ | ○ | ◎◎ | ◎◎ | ◎◎ | ◎◎ | ◎◎ | ◎◎ | ◎◎ |
| | Heat resistance | - | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ |
| | Tg_DMA | °C | 78 | 71 | 18 | 40 | 32 | 78 | 62 | 84 | 38 | 37 | 73 | 45 | 75 | 18 | 68 | 10 | 25 | 1 | 4 | -2 | 22 | 17 |
| | Rate of swelling in oleic acid | % | 1.3 | 1.8 | 2.6 | 2.2 | 2.5 | 1.5 | 1.8 | 1.1 | 2.1 | 2.6 | 2.0 | 2.3 | 1.9 | 2.7 | 2.4 | 3.5 | 1.5 | 4.1 | 3.9 | 4.4 | 2.1 | 2.7 |
| | Scratch resistance | - | ◎ | ◎ | ○ | ◎ | ◎ | ◎ | ◎ | ◎ | ◎ | ◎ | ◎ | ○ | ◎ | ◎ | ◎ | ◎ | ◎ | ◎ | ◎ | ◎ | ◎ | ◎ |
| Peel strength | | - | ◎◎ | ◎◎ | ◎ | ◎ | ◎ | ◎◎ | ◎◎ | ◎◎ | ◎ | ◎ | ◎◎ | ◎ | ◎◎ | ◎ | ◎ | ◎ | ◎◎ | ○ | ○ | ○ | ◎ | ◎ |
| Peel strength retention rate after moist heat resistance test | | - | ◎◎ | ◎◎ | ○ | ○ | ○ | ○ | ○ | ○ | ○ | ○ | ○ | ○ | ○ | ○ | ○ | ○ | ◎◎ | ◎◎ | ◎◎ | ◎◎ | ◎◎ | ◎◎ |

[Table 26]

| Application Comparative Example | | | | 29 | 30 | 31 | 32 | 33 | 34 | 35 | 36 | 37 | 38 | 39 | 40 | 41 | 42 |
|---|---|---|---|---|---|---|---|---|---|---|---|---|---|---|---|---|---|
| Coating film composition g | | Polyol | | B-1 | B-2 | B-3 | B-4 | B-5 | B-6 | B-7 | BPE-20 | BPE-100 | BPEF | BOPPEF | B-2/BPE-100 | B-3/BPEF | B-4/BPE-20 |
| | | | | 300 | 300 | 300 | 300 | 300 | 300 | 300 | 200 | 300 | 200 | 300 | 150/150 | 150/150 | 150/150 |
| | | MDI | | 165 | 41.3 | 82.6 | 165 | 82.6 | 55.1 | 27.5 | 168 | 124 | 126 | 140 | 83 | 135 | 208 |
| | | Hydrogenated MDI | | | | | | | | | | | | | | | |
| | | TDI | | | | | | | | | | | | | | | |
| | | IPDI | | | | | | | | | | | | | | | |
| | | HDI | | | | | | | | | | | | | | | |
| | | 1% DBTL solution | | 2.33 | 1.71 | 1.91 | 2.33 | 1.91 | 1.78 | 1.64 | 1.84 | 2.12 | 1.63 | 2.08 | 1.91 | 2.18 | 2.54 |
| Coating film physical properties | Breaking strength | - | | ◎◎ | × | △ | ◎ | ○ | × | × | ○ | △ | ○ | ○ | △ | ○ | ○ |
| | Breaking elongation | - | | × | ◎◎ | ◎ | × | △ | ◎◎ | ◎◎ | × | △ | × | × | ◎ | △ | × |
| | Heat resistance | - | | ◎ | ◎ | ◎ | ◎ | ○ | ◎ | ◎ | ○ | × | ○ | ○ | △ | ○ | ○ |
| | Tg_DMA | °C | | 92 | -9 | -4 | 25 | 34 | -7 | -14 | 89 | 40 | 92 | 95 | 14 | 42 | 53 |
| | Rate of swelling in oleic acid | % | | 0.9 | 5.2 | 4.9 | 4.5 | 3.1 | 5.0 | 5.5 | 3.2 | 8.7 | 2.9 | 2.5 | 4.5 | 3.8 | 3.9 |
| | Scratch resistance | - | | × | × | × | × | △ | × | △ | ○ | ○ | × | × | △ | △ | △ |
| Peel strength | | - | | × | ○ | △ | △ | ○ | △ | ○ | × | ○ | × | × | ○ | △ | △ |
| Peel strength retention rate after moist heat resistance test | | - | | △ | ○ | ○ | ◎ | ○ | ○ | ○ | × | △ | × | × | △ | × | △ |

<Tensile test>

A test specimen of each thermoplastic urethane resin sheet in the form of a strip of having a width of 10 mm, a length of 100 mm, and a thickness of approximately 1.0 mm was subjected to a tensile test at a temperature of 23°C (relative humidity: 55%) at a distance between chucks of 20 mm and a pulling rate of 100 mm/min using a tensile tester (manufactured by Orientec Co., Ltd., product name "Tensilon, model RTE-1210") to measure strength at break and elongation at break.

(Evaluation criteria)

Breaking strength

◎◎ : The strength at break was 75 MPa or more.

◎: The strength at break was 60 MPa or more and less than 75 MPa.

○: The strength at break was 40 MPa or more and less than 60 MPa.

△: The strength at break was 20 MPa or more and less than 40 MPa.

×: The strength at break was less than 20 MPa or not evaluable.

Breaking elongation

◎◎: The elongation at break was 1300% or more.

◎: The elongation at break was 800% or more and less than 1300%.

○: The elongation at break was 500% or more and less than 800%.

△: The elongation at break was 200% or more and less than 500%.

×: The elongation at break was less than 200% or not evaluable.

<Evaluation of heat resistance>

A sample of each thermoplastic urethane resin sheet in the form of a strip of having a width of 10 mm, a length of 100 mm, and a thickness of approximately 1.0 mm was heated at a temperature of 120°C for 1000 hours in a gear oven. The breaking strength of the sample thus heated was measured in the same manner as in the preceding section <Tensile test at room temperature>, and its retention rate (%) was determined. Heat resistance was evaluated on the basis of the following evaluation criteria from the obtained retention rate.

(Evaluation criteria)

◎: The retention rate was 98% or more.

○: The retention rate was 93% or more and less than 98%.

△: The retention rate was 80% or more and less than 93%.

×: The retention rate was less than 80% or not evaluable.

<Measurement of glass transition temperature (Tg)>

A test specimen having a width of 10 mm, a length of 40 mm, and a thickness of approximately 1.0 mm was cut out of each thermoplastic urethane resin sheet. The test specimen was set to at a distance between chucks of 20 mm using a viscoelasticity measurement apparatus (manufactured by Hitachi High-Tech Science Corp., [TA7000 series, DMA7100]). Viscoelasticity was measured while the temperature was increased from -100°C to 100°C at 5°C/min. The peak of tanδ was read to determine a glass transition temperature (Tg_DMA).

<Evaluation of oleic acid resistance>

A 3 cm × 3 cm test specimen (thickness: approximately 1.0 mm) was cut out of each thermoplastic urethane resin sheet. The weight of the test specimen was measured with a precision balance. Then, the test specimen was added to a 250 mL glass bottle containing 50 mL oleic acid as a test solvent, and the glass bottle was left standing for 16 hours in a thermostat bath of 80°C in a nitrogen atmosphere. The test specimen thus tested was taken out and the front and back sides were lightly wiped with a paper wiper. Then, the weight was measured with a precision balance, and the rate of change in weight (rate of increase: rate of swelling in oleic acid) from the weight before the test was calculated. A rate of change in weight closer to 0% means more favorable oleic acid resistance.

<Scratch resistance>

Each thermoplastic urethane resin sheet was used, and scratched by travelling a brass brush (standard type, 3 rows, manufactured by AS ONE Corp.) installed in RUBBING TESTER (manufactured by Taihei Rika Kogyo Co., Ltd.) back and force 20 times under 745 g load on the coating film. The gloss (X1) of the coating film immediately after scratching was measured using a variable angle glossmeter (UGV-6P, manufactured by Suga Test Instruments Co., Ltd.) with an acceptance angle set to 60 degrees and an incident angle set to 60 degrees. An initial gloss at the same location before the scratch resistance test was defined as X0. A gloss retention rate was calculated according to the following expression (ii):

$$\text{Gloss retention rate (\%)} = (X1 / X0) \times 100 \quad \text{... (ii)}$$

Subsequently, from the obtained gloss retention rate, scratch resistance was evaluated on the basis of the evaluation criteria given below. A coating film having a haze value of 1.0 or more was regarded as being not evaluable because reproducible evaluation is difficult. The haze value was measured with a haze meter (manufactured by Suga Test Instruments Co., Ltd., HMG-2DP).

(Evaluation Criteria)

◎: The gloss retention rate was 95% or more.

○: The gloss retention rate was 85% or more and less than 95%.

△: The gloss retention rate was 75% or more and less than 85%.

×: The gloss retention rate was less than 75% or not evaluable.

(Peel strength measurement)

T-Peel strength (unit: N/25 mm) was measured as to each peel strength measurement sample mentioned above under conditions involving a measurement temperature of 80°C and a pulling rate of 100 mm/min using a tensile tester, and assessed according to the following evaluation criteria.

◎◎: The peel strength was 50 N/25 mm or more.

◎: The peel strength was 30 N/25 mm or more and less than 50 N/25 mm.

○: The peel strength was 10 N/25 mm or more and less than 30 N/25 mm.

△: The peel strength was 5 N/25 mm or more and less than 10 N/25 mm.

×: The peel strength was less than 5 N/25 mm.

[Peel strength retention rate (adhesiveness) after moist heat resistance test]

A test specimen obtained by the same method as in the measurement of the T-peel strength (bond strength) was heated under conditions involving a temperature of 85°C and a humidity of 85% for 10 days in a thermo-hygrostat manufactured by ESPEC Corp. under product name of "PL-1J". The T-peel strength of the obtained test specimen before and after heating was measured by the same method as above. A peel strength retention rate (%) was determined according to the following expression (b), and assessed according to the following evaluation criteria.

Peel strength retention rate (%) = Peel strength after heating / Peel strength before heating × 100 (b) (b)

(Evaluation criteria)

◎◎: The peel strength retention rate was 95% or more.

◎: The peel strength retention rate was 90% or more and less than 95%.

○: The peel strength retention rate was 80% or more and less than 90%.

△: The peel strength retention rate was 50% or more and less than 80%.

×: The peel strength retention rate was less than 50% or not evaluable.

The present application is based on the Japanese patent application filed on March 2, 2023 (Japanese Patent Application No. 2023-031949), the contents of which are incorporated herein by reference.

**Claims**

1. A carbonate group-containing polyol comprising a constituent unit represented by the following formula (I), and having a melt viscosity of 500 to 200000 mPa·s at 50°C:

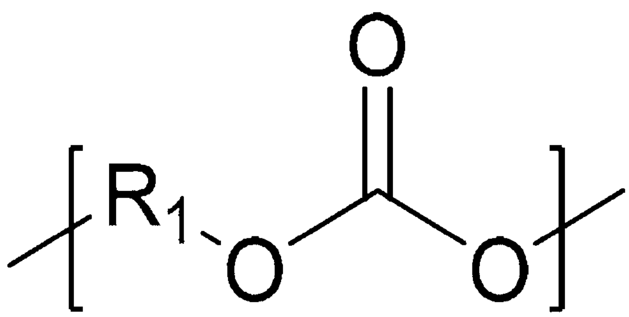

Formula (I)

wherein $R_1$ is an organic group containing

a) an organic group having two or more aromatic cyclic structures, and
b) an optional aliphatic hydrocarbon group, and

has at least one structure wherein the aromatic cyclic structure and the aliphatic hydrocarbon group are linked through an ether bond.

2. The carbonate group-containing polyol according to claim 1, further comprising a constituent unit represented by the following formula (II), in addition to the constituent unit represented by the formula (I):

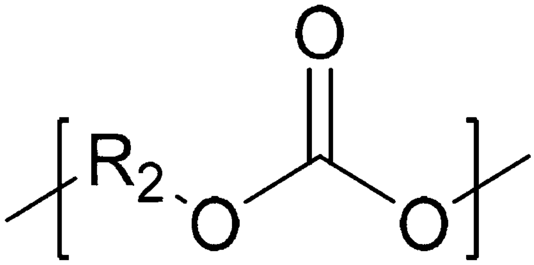

(Formula II)

wherein $R_2$ is an optional aliphatic hydrocarbon group.

3. The carbonate group-containing polyol according to claim 2, wherein $R_1$ in the formula (I) comprises a structure represented by the following formula (III):

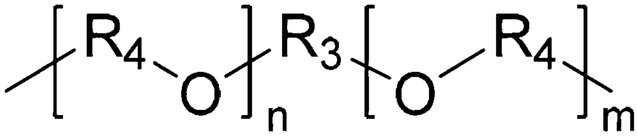

Formula (III)

wherein $R_3$ is an organic group having two or more aromatic cyclic structures, $R_4$ is an optional aliphatic hydrocarbon group, each of n and m is an optional integer including 0, and m + n is 1 or more.

4. The carbonate group-containing polyol according to claim 1, wherein a number-average molecular weight is 300 or larger and 5000 or smaller.

5. The carbonate group-containing polyol according to claim 1, wherein a hydroxyl value (OH value) is 20 to 700 mgKOH/g.

6. The carbonate group-containing polyol according to claim 1, wherein an aromatic concentration is 1 to 65% by mass.

7. The carbonate group-containing polyol according to claim 1, wherein the constituent unit represented by the formula (I) comprises one or more members selected from the group consisting of a bisphenol A skeleton, a bisphenol F skeleton, a biphenyl skeleton, a fluorene skeleton, a thioether group, a sulfonyl group, and a phosphoric acid ester group.

8. The carbonate group-containing polyol according to claim 2, wherein $R_2$ in the formula (II) is an aliphatic hydrocarbon group having 2 to 5 carbon atoms.

9. The carbonate group-containing polyol according to claim 8, wherein a number-average molecular weight is 300 or larger and 3000 or smaller, and an aromatic concentration is 10 to 50% by mass.

10. The carbonate group-containing polyol according to claim 2, wherein $R_2$ in the formula (II) comprises two or more aliphatic structures each having 2 to 20 carbon atoms, and each of the aliphatic structures contains an aliphatic hydrocarbon group having 2 to 5 carbon atoms.

11. The carbonate group-containing polyol according to claim 2, wherein $R_2$ in the formula (II) is an aliphatic hydrocarbon group having 3 carbon atoms, and an aromatic concentration is 10 to 50% by mass.

12. The carbonate group-containing polyol according to claim 11, wherein a number-average molecular weight is 300 or larger and 2000 or smaller.

13. The carbonate group-containing polyol according to claim 12, wherein the aromatic concentration is 10 to 30% by mass.

14. The carbonate group-containing polyol according to claim 13, wherein the number-average molecular weight is 300 or larger and 1500 or smaller.

**15.** The carbonate group-containing polyol according to claim 14, wherein the number-average molecular weight is 300 or larger and 1000 or smaller, and the aromatic concentration is 20 to 30% by mass.

**16.** The carbonate group-containing polyol according to claim 2, wherein $R_2$ in the formula (II) is an aliphatic hydrocarbon group having 4 carbon atoms, and an aromatic concentration is 10 to 50% by mass.

**17.** The carbonate group-containing polyol according to claim 16, wherein a number-average molecular weight is 300 or larger and 2000 or smaller.

**18.** The carbonate group-containing polyol according to claim 17, wherein the aromatic concentration is 10 to 30% by mass.

**19.** The carbonate group-containing polyol according to claim 18, wherein the number-average molecular weight is 300 or larger and 1000 or smaller.

**20.** The carbonate group-containing polyol according to claim 19, wherein the number-average molecular weight is 300 or larger and 800 or smaller.

**21.** The carbonate group-containing polyol according to claim 20, wherein the aromatic concentration is 20 to 30% by mass.

**22.** The carbonate group-containing polyol according to claim 2, wherein $R_2$ in the formula (II) is an aliphatic hydrocarbon group having 5 carbon atoms, and an aromatic concentration is 10 to 50% by mass.

**23.** The carbonate group-containing polyol according to claim 22, wherein a number-average molecular weight is 300 or larger and 2000 or smaller.

**24.** The carbonate group-containing polyol according to claim 23, wherein the aromatic concentration is 10 to 30% by mass.

**25.** The carbonate group-containing polyol according to claim 24, wherein the number-average molecular weight is 300 or larger and 1500 or smaller.

**26.** The carbonate group-containing polyol according to claim 25, wherein the number-average molecular weight is 300 or larger and 1000 or smaller.

**27.** The carbonate group-containing polyol according to claim 26, wherein the aromatic concentration is 20 to 30% by mass.

**28.** The carbonate group-containing polyol according to claim 2, wherein $R_2$ in the formula (II) is an aliphatic hydrocarbon group having 6 carbon atoms, and an aromatic concentration is 10 to 50% by mass.

**29.** The carbonate group-containing polyol according to claim 28, wherein a number-average molecular weight is 300 or larger and 2000 or smaller.

**30.** The carbonate group-containing polyol according to claim 29, wherein an aromatic concentration is 20 to 50% by mass.

**31.** The carbonate group-containing polyol according to claim 30, wherein the number-average molecular weight is 300 or larger and 1500 or smaller.

**32.** The carbonate group-containing polyol according to claim 2, wherein $R_2$ in the formula (II) comprises two or more aliphatic structures each having 2 to 20 carbon atoms, and each of the aliphatic structures contains an aliphatic hydrocarbon group having 6 carbon atoms.

**33.** The carbonate group-containing polyol according to claim 2, wherein $R_2$ in the formula (II) is an aliphatic hydrocarbon group having 7 to 10 carbon atoms.

**34.** The carbonate group-containing polyol according to claim 2, wherein $R_2$ in the formula (II) comprises two or more aliphatic structures each having 2 to 20 carbon atoms, and each of aliphatic structures contains an aliphatic hydrocarbon group having 7 to 10 carbon atoms.

**35.** The carbonate group-containing polyol according to claim 33, wherein a number-average molecular weight is 300 or larger and 3000 or smaller, and an aromatic concentration is 10 to 50% by mass.

**36.** The carbonate group-containing polyol according to claim 2, wherein $R_2$ in the formula (II) comprises two or more aliphatic structures each having 2 to 20 carbon atoms.

**37.** Polyurethane which is a polymerized product of the carbonate group-containing polyol according to any one of claims 1 to 36 and an isocyanate compound.

**38.** An adhesive comprising the polyurethane according to claim 37.

**39.** A coating material comprising the polyurethane according to claim 37.

**40.** An encapsulant comprising the polyurethane according to claim 37.

## INTERNATIONAL SEARCH REPORT

International application No. **PCT/JP2024/007833**

### A. CLASSIFICATION OF SUBJECT MATTER

***C08G 64/04***(2006.01)i; ***C08G 18/44***(2006.01)i; ***C09D 175/04***(2006.01)i; ***C09J 175/04***(2006.01)i; ***C09K 3/10***(2006.01)i
FI: C08G64/04; C08G18/44; C09J175/04; C09D175/04; C09K3/10 D

According to International Patent Classification (IPC) or to both national classification and IPC

### B. FIELDS SEARCHED

Minimum documentation searched (classification system followed by classification symbols)

C08G64/04; C08G18/44; C09D175/04; C09J175/04; C09K3/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X<br>Y | US 2019/0382522 A1 (INDUSTRIAL TECHNOLOGY RESEARCH INSTITUTE) 19 December 2019 (2019-12-19)<br>claims, paragraphs [0003]-[0009], [0012]-[0035], table 1, example 5, table 2 | 1-40<br>8-27, 32-36 |
| X<br>Y | JP 3-199230 A (DAICEL CHEM. IND. LTD.) 30 August 1991 (1991-08-30)<br>claims, pp. 1-6, examples | 1-7, 28-31, 37-40<br>8-27, 32-36 |
| A | WO 2021/230085 A1 (MITSUBISHI GAS CHEMICAL COMPANY, INC.) 18 November 2021 (2021-11-18) | 1-40 |
| A | JP 2021-116337 A (MITSUI CHEMICALS, INC.) 10 August 2021 (2021-08-10) | 1-40 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/007833**

| Patent document cited in search report | Publication date (day/month/year) | Patent family member(s) | Publication date (day/month/year) |
| --- | --- | --- | --- |
| US 2019/0382522 A1 | 19 December 2019 | TW 202000727 A | |
| | | CN 110615890 A | |
| JP 3-199230 A | 30 August 1991 | (Family: none) | |
| WO 2021/230085 A1 | 18 November 2021 | US 2023/0192951 A1 | |
| | | EP 4151668 A1 | |
| | | CN 115516005 A | |
| | | KR 10-2023-0009871 A | |
| | | TW 202200670 A | |
| JP 2021-116337 A | 10 August 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2251523 A
- JP 2011148886 A
- JP 6538363 B
- JP 2023031949 A